# EUROPEAN PATENT SPECIFICATION

(11) **EP 4 591 131 B1**
(45) Date of publication and mention of the grant of the patent: **15.07.2026**
(21) Application number: 23868861.8
(22) Date of filing: 19.09.2023
(51) Int. Cl.: G05D 1/00, G05D 1/20, G08B 21/12, G05B 23/02, G01M 3/04, G06T 7/70, G01M 3/00, B64U 101/26, G05B 19/418, G05D 1/243, G05D 1/246, G05D 1/646, G05D 1/689, G05D 105/80, G05D 107/70, G05D 109/20, G05D 111/10, G05D 111/50, G08B 29/14

(54) **SYSTEMS AND METHODS FOR INSPECTIONS USING UNMANNED AUTONOMOUS VEHICLES**
SYSTEME UND VERFAHREN FÜR INSPEKTIONEN MIT UNBEMANNTEN AUTONOMEN FAHRZEUGEN
SYSTÈMES ET PROCÉDÉS S'APPLIQUANT À DES INSPECTIONS À L'AIDE DE VÉHICULES AUTONOMES SANS PILOTE

(30) Priority: 19.09.2022 US 202263376142 P; 19.09.2022 US 202263376149 P; 19.09.2022 US 202263376153 P; 15.12.2022 US 202263387577 P
(43) Date of publication of application: 30.07.2025
(73) Proprietor: Cameron Technologies Limited, 2514 JG The Hague (NL)
(72) Inventor: GHORBANI, Nasser, Menlo Park, California 94025 (US); REZAEI, Ali, Houston, Texas 77041 (US); THE, Lucio, Houston, Texas 77042 (US); VAN HAECKE, Bernard, Menlo Park, California 94025 (US); MULCHANDANI, Kishore, Menlo Park, California 94025 (US)
(74) Representative: Schlumberger Intellectual Property Department
(86) International application number: PCT/US2023/033130
(87) International publication number: WO 2024/064129

(56) References cited:
- KR-A- 20200 009 310
- KR-A- 20220 023 163
- KR-B1- 102 237 432
- US-A1- 2017 240 278
- US-A1- 2017 240 278
- US-A1- 2020 103 881
- US-A1- 2021 004 020
- ASADZADEH SAEID ET AL: "UAV-based remote sensing for the petroleum industry and environmental monitoring: State-of-the-art and perspectives", JOURNAL OF PETROLEUM SCIENCE AND ENGINEERING, vol. 208, 1 January 2022 (2022-01-01), NL, pages 109633, XP093160227, ISSN: 0920-4105, DOI: 10.1016/j.petrol.2021.109633
- HUSSEIN MAHMOUD ET AL: "Key technologies for safe and autonomous drones", MICROPROCESSORS AND MICROSYSTEMS, IPC BUSINESS PRESS LTD. LONDON, GB, vol. 87, 22 October 2021 (2021-10-22), XP086891915, ISSN: 0141-9331, [retrieved on 20211022], DOI: 10.1016/J.MICPRO.2021.104348

## Description

### CROSS-REFERENCES TO RELATED APPLICATIONS

This application claims priority to and the benefit of U.S. Provisional Patent Application Serial No. 63/376,142, entitled "AUTOMATED UNCREWED INSPECTION", filed September 19, 2022; U.S. Provisional Patent Application Serial No. 63/376,149, entitled "SYSTEMS AND METHODS FOR UNMANNED AUTONOMOUS VEHICLE NAVIGATION", filed September 19, 2022; U.S. Provisional Patent Application Serial No. 63/376,153, entitled "GAS SENSOR INSPECTION USING AN UNMANNED AUTONOMOUS VEHICLE", filed September 19, 2022; and U.S. Provisional Patent Application Serial No. 63/387,577, entitled "SELF-LEARNING AUTONOMOUS INSPECTION AND ANOMALY DETECTION USING GROUND ROBOTS", filed December 15, 2022.

### BACKGROUND

The present disclosure generally relates to unmanned autonomous vehicles, and more particularly to using unmanned autonomous vehicles to perform inspections.

This section is intended to introduce the reader to various aspects of art that may be related to various aspects of the present disclosure, which are described and/or claimed below. This discussion is believed to help provide the reader with background information to facilitate a better understanding of the various aspects of the present disclosure. Accordingly, it is understood that these statements are to be read in this light, and not as admissions of prior art.

Unmanned autonomous vehicles, such as unmanned ground vehicles (UGVs) or ground-based drones, unmanned aerial vehicles (UAVs) or aerial drones, unmanned underwater vehicles (UUVs) or underwater drones, unmanned surface vehicles (USV) or uncrewed boats, and so forth, may be used for various purposes in various industries. For example, unmanned autonomous vehicles may be used to perform inspections of oil and gas production sites, processing facilities, refineries, manufacturing facilities, energy facilities, and so forth. Inspection by unmanned autonomous vehicles can be more consistent and less time-consuming and expensive than inspections performed by human operators, for example, using handheld devices. Use of unmanned autonomous vehicles may be particularly desirable in cases where exposure to fluid emissions (e.g., gases and/or liquids) may be detrimental to an operator's health and/or may violate one or more regulatory policies that aim to limit exposure of certain chemicals to employees of an enterprise.

As an examples of the state of the art could be cited US2017/240278A1.

### SUMMARY

The invention is set forth in the independent claim 1 and in the dependent claims 2 to 10. The disclosed techniques are directed to using unmanned autonomous vehicles to perform inspections of, for example, gas sensors or other assets located within a processing facility. For example, the unmanned autonomous vehicles may autonomously navigate through a processing facility to perform the inspections. In addition, one or more properties of data captured by the unmanned autonomous vehicles may be controlled based on real-time conditions to optimize the inspection of the assets of the processing facility. Furthermore, the unmanned autonomous vehicles may be configured to perform calibration of the assets when anomalies readings are collected. In addition, the unmanned autonomous vehicles may be self-learning autonomous devices configured to learning from data collected during previous inspections of assets.

### BRIEF DESCRIPTION OF THE DRAWINGS

FIG. 1 shows a schematic of an example facility and an unmanned aerial vehicle (UAV) for inspecting one or more assets within the facility, in accordance with aspects of the present disclosure;
FIG. 2 shows a schematic view of the UAV of FIG. 1 and a UAV docking station, in accordance with aspects of the present disclosure;
FIG. 3 is a flow chart of a process for self-learning autonomous inspection and anomaly detection using the UAV shown in FIGS. 1 and 2, in accordance with aspects of the present disclosure;
FIG. 4 is a flow chart of another process for self-learning autonomous inspection and anomaly detection using the UAV shown in FIGS. 1 and 2, in accordance with aspects of the present disclosure;
FIG. 5 is a flow chart of a process for inspecting the gas sensors of FIG. 1 via the UAV shown in FIGS. 1 and 2, in accordance with aspects of the present disclosure;
FIG. 6 is a flow chart of a process for performing sensor inspection via the UAV shown in FIGS. 1 and 2, in accordance with aspects of the present disclosure;
FIG. 7 illustrates an embodiment of a pre-defined path through a processing facility that an automated uncrewed vehicle traverses to capture data associated with the processing facility, in accordance with aspects of the present disclosure;
FIG. 8 illustrates an embodiment of a portion of the pre-defined path of FIG. 7 associated with a sub-system of the processing facility, showing one or more optimal data capture locations from which the automated uncrewed vehicle may capture data, in accordance with aspects of the present disclosure;
FIG. 9 illustrates a schematic of an embodiment of the automated uncrewed vehicle of FIG. 7, in accordance with aspects of the present disclosure;
FIG. 10 illustrates an embodiment of a flow diagram of a method for optimizing an inspection process of a processing facility using an automated uncrewed vehicle, in accordance with aspects of the present disclosure; and
FIG. 11 illustrates an embodiment of a schedule of inspection missions and respective times to perform the inspection missions, in accordance with aspects of the present disclosure.

### DETAILED DESCRIPTION

One or more specific embodiments of the present disclosure will be described below. These described embodiments are only examples of the presently disclosed techniques. Additionally, in an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

As used herein, the terms "connect", "connection", "connected", "in connection with", and "connecting" are used to mean "in direct connection with" or "in connection with via one or more elements"; and the term "set" is used to mean "one element" or "more than one element". Further, the terms "couple", "coupling", "coupled", "coupled together", and "coupled with" are used to mean "directly coupled together" or "coupled together via one or more elements". As used herein, the terms "up" and "down"; "upper" and "lower"; "top" and "bottom"; and other like terms indicating relative positions to a given point or element are utilized to more clearly describe some elements. Commonly, these terms relate to a reference point at the surface from which drilling operations are initiated as being the top point and the total depth being the lowest point, wherein the well (e.g., wellbore, borehole) is vertical, horizontal or slanted relative to the surface.

In addition, as used herein, the terms "real time", "real-time", or "substantially real time" may be used interchangeably and are intended to described operations (e.g., computing operations) that are performed without any human-perceivable interruption between operations. For example, as used herein, data relating to the systems described herein may be collected, transmitted, and/or used in control computations in "substantially real time" such that data readings, data transfers, and/or data processing steps occur once every second, once every 0.1 second, once every 0.01 second, or even more frequent, during operations of the systems (e.g., while the systems are operating). In addition, as used herein, the terms "automatic" and "automated" are intended to describe operations that are performed are caused to be performed, for example, by a control system (i.e., solely by the control system, without human intervention).

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately," "about," "generally," and "substantially" may refer to an amount that is within less than 10% of, within less than 5% of, within less than 1% of, within less than 0.1% of, and/or within less than 0.01% of the stated amount. As another example, in certain embodiments, the terms "generally parallel" and "substantially parallel" or "generally perpendicular" and "substantially perpendicular" refer to a value, amount, or characteristic that departs from exactly parallel or perpendicular, respectively, by less than or equal to 15 degrees, 10 degrees, 5 degrees, 3 degrees, 1 degree, or 0.1 degree.

The disclosed techniques include using unmanned autonomous vehicles, such as such as unmanned ground vehicles (UGVs) or ground-based drones, unmanned aerial vehicles (UAVs) or aerial drones, unmanned underwater vehicles (UUVs) or underwater drones, unmanned surface vehicles (USVs) or uncrewed boats, and so forth, to perform inspections of sensors, such as gas sensors. The unmanned autonomous vehicle may receive instructions to conduct an inspection of a gas sensor, navigate to a gas sensor, and communicatively couple to the sensor. If the sensor exhibits an abnormality, the unmanned autonomous vehicle may flag the sensor for human intervention (e.g., service, maintenance, etc.) and conclude the inspection. If the sensor does not exhibit an abnormality, the unmanned autonomous vehicle compares a reading of the sensor to an expected value. If the reading of the sensor is not within an acceptable range of the expected value, and/or the instructions to conduct the inspection included instructions to perform a calibration, the unmanned autonomous vehicle initiates a calibration process. Specifically, the unmanned autonomous vehicle emits multiple known concentrations of a gas sample and records the sensor's response to the gas samples. A calibration curve is then generated based on the sensor's response to the gas samples and the calibration of the sensor is updated based on the calibration curve. In some embodiments, collected data may be used for updating a machine learning algorithm for determining the next calibration and/or inspection. The unmanned autonomous vehicle communicatively decouples from the sensor and concludes the inspection.

Technical effects of implementing the disclosed techniques include more efficient gas sensor inspection relative to gas sensor inspection performed by humans. Further, the unmanned autonomous vehicle may be capable of operating in environments that may be inhospitable to humans because of extreme temperatures, pressures, chemicals present, confined spaces, etc. Further, an unmanned autonomous vehicle may be available at all hours of the day and may be capable of performing inspections for longer periods of time without variation in inspection process or degradation in performance. Accordingly, the disclosed techniques result in more efficient use of resources and more reliable inspections.

With increased efforts to reduce undesirable fluid emissions, more frequent inspections of processing facilities (e.g., oil and gas processing facilities) are mandated by governments. Accordingly, early leak detection for processing facilities may be beneficial for safety and environmental protection. Some common gas leak detection methodologies include handheld devices used by operators, fixed sensors disposed in the facility, and/or mobile ground labs (MGLs), while liquid leak detection is typically performed acoustically. For example, operators may be tasked with patrolling a processing facility using a handheld device and capturing and analyzing data associated with various pieces of equipment to identify leaks. However, such techniques may be uncertain, inconsistent, time-consuming, and expensive. Further, exposure to fluid emissions (e.g., gases and/or liquids) may be detrimental to an operator's health and/or may violate one or more regulatory policies that aim to limit exposure of certain chemicals to employees of an enterprise. Accordingly, a need exists for automated uncrewed vehicles to perform inspections (e.g., leak detection) at a facility, while accounting for various factors that reduce the accuracy of such inspections.

Early detection of leaks (e.g., undesirable gas or liquid spills) and/or other abnormalities (e.g., equipment failure) from processing facilities (e.g., oil and gas processing facilities) is beneficial from safety, economic, and regulatory perspectives. Typically, common inspection processes for leak detection and/or abnormality detection may involve an operator patrolling a processing facility with a handheld device (e.g., sensor, camera, microphone) to capture data related to the processing facility. As the operator captures data, the operator may be further tasked with analyzing the data to determine whether an issue is present. In other traditional inspection processes, point sensors may be fixed to various components, systems, and/or sub-systems and may be configured to capture data related to the various components. Still in other traditional systems, mobile ground labs (MGLs) may be utilized by operators during an inspection process to perform testing, detect leaks and/or detect other abnormalities of the processing facility.

However, each of the techniques currently used for leak detection and/or abnormality detection has significant limitations. For example, handheld devices used for leak detection are carried by a human operator, which is time-consuming, expensive, and can increase health related risks. Additionally, data captured by the handheld devices is interpreted by the operator and thus an operator's experience level can significantly impact identification of leaks and/or other abnormalities. Moreover, leak inspections and/or abnormality inspections are typically done occasionally, and as such, data collected from the inspections may be received after a point in time at which the leak or abnormality can be addressed. Further still, fixed-point sensors may only be sensitive to a specific gas or fluid, and may require a specific threshold concentration of the gas to directly contact the sensor before a leak is detected. Moreover, while the design of sensor placement (e.g., number, location, height) may take into account the geometry of the facility and/or historical environmental data, it may be difficult to predict the direction of the gas leak based on current environmental conditions (e.g., wind speed, wind direction), and thus the point sensor may record inconsistent and/or uninterpretable results. Indeed, traditional systems and methods for inspecting a processing facility are associated with significant costs, increased health risks, and inconsistent results. Accordingly, it is now recognized that improved systems and methods for inspecting a processing facility utilizing an automated uncrewed vehicle are desired.

With this in mind, the advent of systems and methods that utilize an automated uncrewed vehicle (e.g., robot, drone) to perform an inspection (e.g., inspection mission) of a processing facility has made anomaly detection (e.g., gas leak detection, liquid leak detection, abnormality detection) within the processing facility more feasible. For example, the techniques disclosed herein provide for an automated uncrewed vehicle to traverse a pre-defined path across a processing facility to retrieve data that may be utilized to identify anomalies associated with the processing facility. The automated uncrewed vehicle may be programmed to perform an inspection mission, which may consist of a series of tasks to be performed around the processing facility. Accordingly, the automated uncrewed vehicle may carry a payload of one or more inspection devices (e.g., sensors, tools, monitoring equipment, etc.) that are configured to capture data related to a specific sub-set of tasks associated with the inspection mission, such that for different inspection missions, different payloads may be carried by the automated uncrewed vehicle. Additionally, as the vehicle traverses the pre-defined path, the vehicle may dynamically receive data associated with environmental conditions at the processing facility, which may be utilized to optimize the manner in which the uncrewed vehicle captures data. For example, the environmental conditions may include wind conditions, cloud conditions, lighting conditions, precipitation conditions, storm conditions, presence of people or animals, surrounding equipment conditions, noise conditions, or any combination thereof. The disclosed embodiments may use the environmental conditions to change the position between the payload and the target for inspection, employ interference reduction measures, and/or use machine learning to improve the inspection process, as described in greater detail herein. The change in position may include a change in a distance, an elevation, an angle or orientation, and/or X, Y, Z coordinates of the payload relative to the target for inspection. The interference reduction measures may include sunlight shields, wind shields, precipitation shields, noise reduction features, or any combination thereof. For example, upon detecting environmental conditions indicative of a wind speed and a wind direction, the automated vehicle may utilize machine learning to optimize the location of the data capturing device (e.g., change angle, distance from equipment, etc.) to retrieve data associated with the anomaly (e.g., leak detection, abnormality detection), as described in greater detail herein. Upon capturing the data, the automated uncrewed vehicle may process the data to identify leaks and/or other abnormalities associated with the processing facility.

Indeed, the present techniques discussed herein may reduce reliance on human intervention, thereby reducing the likelihood of human error and increasing accuracy associated with leak detection and/or abnormality detection. Additionally, automated uncrewed vehicles may be capable of performing in areas where human operators have limited access and/or performing continuously, thereby enabling constant collection of data and earlier detection of anomalies. Further still, by utilizing automated uncrewed vehicles, costs associated with inspecting a processing facility may be reduced and efficiency may be increased.

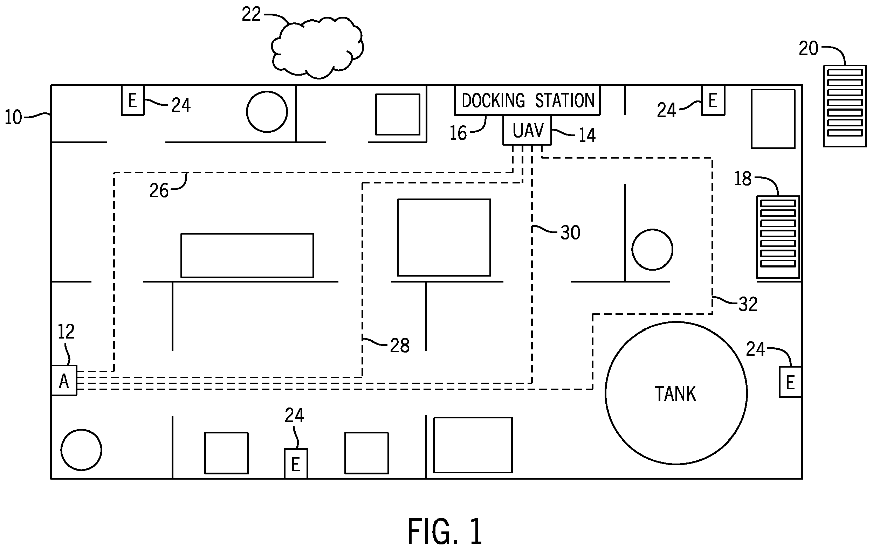

FIG. 1 is a schematic of a facility 10. The facility 10 may be an industrial facility, such as a manufacturing facility, an oil and gas drilling and/or extraction facility (e.g., on-shore or off-shore), an oil, gas, or produced water processing facility, a mine, a lab, a refinery, a waste processing center, a water treatment plant, a lumber mill, a machine shop, a wind turbine, etc. In other embodiments, the facility 10 may be a commercial facility, such as an office, a hospital or other medical facility, a restaurant, a retail store, a hotel, a gym, an events venue, a ship, etc. In further embodiments, the facility 10 may be residential facility, such as a house, an apartment building, etc. The facility 10 may also be a public facility such as a school, a government office building, a courthouse, a library, an airport, a train station, a bridge, a highway, etc. The facility 10 may be entirely indoors, entirely outdoors, or have a mix of indoor and outdoor spaces. Similarly, the facility 10 may be on land, in the air, on the water, under water, and so forth.

In certain embodiments, the facility 10 may include one or more assets 12. The assets 12 may include, for example, pieces of equipment (e.g., tanks, mixers, manufacturing tooling, etc.), inventory, raw materials, doors, windows, human workers, robots, computing and/or networking equipment, pumps, valves, vessels, heating, ventilation, and air conditioning (HVAC) systems, heaters, radio frequency identification (RFID) tags, security systems, and so forth. In some embodiments, the assets 12 may be or include one or more processing sub-systems that are configured to process oil/gas and/or perform various other functions. For example, during operation of the processing facility 10, oil and/or gas may be passed from one processing sub-system to another to treat, clean, process, and prepare the oil and/or gas for downstream consumption. Each of the processing sub-systems may include a number of components (e.g., valves, conduits, tanks, gauges, compressors, and the like) that may be utilized to process the oil and/or gas or convey the oil and/or gas to another location within the processing facility 10.

In certain embodiments, the assets 12 may be sensors, such as gas sensors, temperature sensors, pressure sensors, humidity sensors, flow sensors, flow meters, flame sensors, liquid sensors, vibration sensors, accelerometers, motion sensors, light sensors, and so forth. For example, in some embodiments, the assets 12 may include one or more gas sensors configured to detect when certain gases, vapors, fluids, or particulates are present in the air at the facility 10. For example, the gas sensors 12 may be configured to detect a combustible gas (e.g., natural gas, methane, hydrogen, syngas, etc.), an acid gas (e.g., hydrogen sulfide, carbon dioxide, etc.), carbon monoxide, and so forth, the presence of which may be indicative of a leak, a spill, a fire, insufficient venting, and so forth. In some cases, the presence of certain gases may be indicative of a leak, a spill, a fire, insufficient venting, and so forth. The gas sensors 12 may be configured to detect whether a gas is present, the concentration of a detected gas, whether a concentration of a particular gas is above a threshold value, or some combination thereof. Though the disclosed techniques are discussed mostly with respect to gas sensors, similar techniques may be applied to other types of sensors, such as temperature sensors, pressure sensors, humidity sensors, flow sensors, flow meters, flame sensors, vibration sensors, accelerometers, and so forth.

The assets 12 of the facility 10 may be periodically inspected and/or calibrated by a UAV 14, as described in greater detail herein. Inspection and/or calibration of the assets 12 may be performed on a set schedule (e.g., as defined by policies set forth my by the entity that manages the facility 10, local, state, or federal law or regulation, standard setting organization guidelines, industry best practices, a machine learning-based algorithm, etc.), after a set number of cycles, on demand, in response to some triggering event, upon anomalous data being collected, etc. In some embodiments, if the asset 12 is or includes a measurement device, the inspection may include calibration of the measurement device.

Although described with reference to FIGS. 1 through 7 as being an unmanned aerial vehicle or aerial drone, in other embodiments, the UAV 14 may instead be any other type of unmanned autonomous vehicle, such as an unmanned ground vehicle (UGV) or ground-based drone, unmanned underwater vehicles (UUV) or underwater drone, unmanned surface vehicles (USV) or uncrewed boat, and so forth. As described in greater detail herein, the UAV 14 may dock at a docking station 16 when not in use. The docking station 16 may provide power to the UAV 14 (e.g., charging batteries), communicate with the UAV 14 (e.g., provide routes or other mapping data for download), and perform various other functions (e.g., provide calibration samples) via the docking station 16, as described in greater detail herein.

To perform an inspection and/or calibration, the UAV 14 may depart the docking station 16 and travel along a route to one or more of the sensors 12. In certain embodiments, the UAV 14 may navigate to the sensor 12 along the route based on an identified tag associated with the sensor 12, a series of waypoints, a planned route provided to the UAV 14, autonomously navigating along a map provided to the UAV 14, based on guidance provided by a remote operator, and so forth.

Once the UAV 14 arrives at the sensor 12, the UAV 14 may establish a communicative connection with the sensor 12 (e.g., via Bluetooth, Zigbee, LoRaWan, Z-Wave, etc.). After the UAV 14 has established a connection with the sensor 12, the UAV 14 may put the sensor 12 into an inspection mode, disconnect the sensor 12 from the facility's 10 loop, or otherwise cause the sensor 12 to indicate that the sensor 12 is being inspected and/or calibrated. Accordingly, if the sensor 12 detects that certain gases are present during inspection, the facility 10 will assume that detection of those gases is associated with the inspections/calibration process and that typical responses to the gas being detected under normal circumstances (e.g., shutting down the facility, evacuating the facility, sending an inspection robot to the area, turning on fire sprinklers, notifying emergency response teams, etc.) may not be implemented.

After communicatively coupling the UAV 14 to the sensor 12, the UAV 14 may check the sensor 12 for abnormalities, such as abnormal readings (e.g., current, voltage, power, etc.), lack of power, lack of signal, signs of damage, etc. Additionally, the UAV 14 may check connections, tag numbers on cables and/or sensors, grounding, etc. If abnormalities are detected, indicating that the sensor 12 is not working, the UAV 14 may stop the inspection and flag the sensor for human attention (e.g., service, maintenance, replacement etc.). In some embodiments, the UAV 14 may then release one or more samples of known gases or fluids and monitor how the sensor 12 responds to the sample. For example, the UAV 14 may compare the response of the sensor 12 to the known qualities of the released sample and determine whether a quality measured by the sensor 12 is within a threshold amount or a number of standard deviations of the known quality. If the output of the sensor 12 is within a threshold amount or a number of standard deviations of the known quality, the UAV 14 determines that the sensor 12 is not in need of calibration and concludes the inspection.

If the output of the sensor 12 is not within a threshold amount or a number of standard deviations of the known quality, the UAV 14 may initiate a calibration process for the sensor 12. For example, the UAV 14 may emit multiple samples of known concentrations of one or more gases, measure the sensor's 12 responses to each of the emitted samples, compare the sensor's 12 responses to the known qualities of the emitted samples, and generate a calibration curve. The calibration curve may then be used to update the calibration of the sensor 12. In some embodiments, once the calibration of the sensor 12 has been completed, the UAV 14 may retest the sensor's response to a gas sample or the ambient air around the sensor 12 to determine if the sensor 12 is outputting reasonable values. If so, the UAV 14 may conclude the inspection process. If not, the UAV 14 may repeat the calibration process or flag the sensor 12 for human intervention and conclude the inspection process.

In certain embodiments, the UAV 14 may be configured to forego emitting gas samples in the facility 10. In such embodiments, the UAV 14 may be configured to stimulate the sensor 12 in a way that simulates how a sensing element of the sensor 12 responds to a gas sample. This may include, for example, applying a voltage, a current, a resistance, a capacitance, an impedance, etc. to the sensor 12. The UAV 14 may monitor how the sensor 12 responds to the voltage, current, resistance, capacitance, impedance, etc., and compare the actual response of the sensor 12 to the voltage, current, resistance, capacitance, impedance, etc. to the expected response of the sensor 12 to the voltage, current, resistance, capacitance, impedance, etc. If the actual response matches or is within some acceptable range of the expected response, the inspection may be completed without calibration of the sensor 12. However, if the actual response does not match or is not within some acceptable range of the expected response, the UAV 14 may initiate a calibration process of the sensor 12. In one embodiment, the calibration process may be the same or similar to the calibration process described above in which gas samples of known concentrations are emitted near the sensor 12. In another embodiment, the UAV 14 may be configured to apply a sequence of known voltages, currents, resistances, capacitances, impedances, etc., and then use the response of the sensor 12 to those voltages, currents, resistances, capacitances, impedances, etc. to generate a calibration curve. In some embodiments, once the calibration of the sensor 12 has been completed, the UAV 14 may retest the sensor's response to a known stimulation (e.g., voltage, current, resistance, capacitance, impedance, etc.) to determine if the sensor 12 is outputting reasonable values. If so, the UAV 14 may conclude the inspection process. If not, the UAV 14 may repeat the calibration process or flag the sensor 12 for human intervention and conclude the inspection process. Once the inspection is complete, the UAV 14 may navigate to another sensor 12 to perform an inspection, back to the docking station 16, or elsewhere in the facility 10 to perform an inspection or some other assigned task.

As shown in FIG. **1****,** the UAV 14 and/or the docking station 16 may be in communication with a local server 18 located at the facility 10, a remote server 20 disposed at a remote location relative to the facility 10, a cloud 22 (e.g., a public and/or private distributed computing architecture configured to provide storage and/or computing resources via one or more cloud-based computing devices), and/or one or more edge devices 24 (e.g., routers, switches, gateway devices, internet of things (IoT) devices, or other devices connected to a network that have computing capabilities) located at the facility 10. As discussed in more detail below, the UAV 14 may receive route data and/or traffic data from the local server 18, the remote server 20, the cloud 22, and/or the one or more edge devices 24, either directly or via the docking station 16. The route data may be based on satellite images, maps of the facility 10, data collected from sensors at the facility 10, and so forth. Further, in some embodiments, the UAV 14 may transmit requests for, and receive data regarding alternative routes, updated route information that takes one or more sensed items into consideration, and so forth.

Typically, when performing a routine or scheduled inspection, the UAV 14 receives a pre-programmed and approved route or series of waypoints that includes one or more inspection stops. The UAV 14 departs at a scheduled time, travels the route or follows the waypoints, performs the one or more inspections, returns collected data, and returns to the docking station 16 or other route end location. In some cases, an asset 12 may generate an alert indicative of the asset 12 or an area around the asset 12 experiencing a condition or problem, such as a fire, a chemical leak/spill, equipment failure, etc. In such cases, an inspection of the asset 12 may be requested on short notice to assess the situation and determine a plan of action to address the condition or problem. In other embodiments, the inspection may be an unplanned inspection, an unscheduled inspection, an emergency inspection, a real-time generated inspection (or something along these lines), an alert/alarm triggered inspection, or control system triggered inspection (e.g., based on various sensors data and/or facility conditions indicating a potential real-time problem). However, in some cases, a previously generated route from the UAV's 14 current location to the asset 12 to be inspected may not exist. Further, even if a route from the UAV's 14 current location to the asset 12 to be inspected does exist, the route may be planned for a different time of day when traffic from other UAVs, vehicles, humans, wildlife, etc., may be different. Further, obstructions along the route, such as doors being open or closed, etc., may vary depending upon the time of day. Accordingly, to develop a route quickly, the UAV 14 may receive route data from the docking station 16, the local server 18, the remote server 20, the cloud 22, and/or the one or more edge devices 24, either directly or via the docking station 16. The route data may include, for example, multiple route options (e.g., route A 26, route B 28, route C 30, and route D 32), a suggested route of the available options, and/or available traffic data indicative of known routes being traveled by other UAVs at the time, or trends in traffic by humans, vehicles, wildlife, etc. at that time. The UAV 14 may select a route (e.g., route A 26) from the available routes (e.g., route A 26, route B 28, route C 30, and route D 32), which may or may not be the suggested route, and depart along route A 26 toward the asset 12.

As the UAV 14 travels along route A 26, the UAV 14 may utilize one or more onboard sensors (e.g., proximity sensors, laser, sonar, camera, a red, blue, green, depth (RGB-D) camera, etc.) to identify unexpected obstructions along the route, such as other UAVs, humans, wildlife, vehicles, cleaning equipment, closed doors, fire, etc. If the UAV 14 encounters such an obstruction, the UAV 14 may stop in its place or identify a place to stop, and transmit a request for assistance to a nearby edge device 24, the docking station 16, the local server 18, the remote server 20, and/or the cloud 22. For example, if the UAV 14 requests help from a nearby edge device 24, the UAV 14 may transmit route data, which may be the same route data received before commencement of the mission, or a subset of the data received before commencement of the mission, to the edge device 24, along with data collected by the UAV 14 associated with the unexpected obstruction. This data may include, for example, video data, sonar data, and so forth. The edge device 24 may analyze the received data and suggest an alternative route (e.g., route B 28), or suggest that the UAV 14 continue along the planned route (e.g., route A 26). If the UAV 14 chooses to default to an alternative route (e.g., route B 28), the UAV 14 may determine how to get to the alternative route (e.g., route B 28) and then proceed along that path. For example, in the embodiment shown in FIG. 1, the UAV 14 may backtrack along route A 26 until it reaches route B 28 and then follow route B 28 to the asset 12. However, in some embodiments, the recognition of the obstruction and decision to default to an alternative route may be made entirely onboard the UAV 14. The UAV 14 may also use onboard sensors to detect fire smoke, leaks, chemical skills, wildlife, authorized people, etc.

Once the UAV 14 arrives at the asset 12, the UAV 14 may perform the inspection. In some embodiments, the UAV 14 may utilize onboard sensors (e.g., tactile, chemical (e.g., gas/vapor sensors), ultrasound, temperature, laser, sonar, camera, an RGB-D camera, etc.) to inspect the asset 12. The inspection may include, for example, checking connections, tag numbers on cables and/or sensors, grounding, checking for abnormal readings (e.g., current, voltage, power, etc.), lack of power, lack of signal, signs of damage, etc. In some embodiments, the UAV 14 may be configured to communicatively couple to the asset 12 (e.g., via a wireless network connection, a wired network connection, cellular data service, Bluetooth, Near Communication (NFC), ZigBee, ANT+, LoRaWan, Z-wave, or some other communication protocol) and collect data from the asset 12. In some embodiments, collected data may be transmitted to the docking station 16, the local server 18, the remote server 20, the cloud 22, and/or the one or more edge devices 24 while the UAV 14 is in the presence of the asset 12. However, in other embodiments, the UAV 14 may wait to transmit collected data until the UAV 14 has returned to the docking station 16 or otherwise completed the mission and reached the end of its route. In some embodiments, the UAV 14 may flag the asset 12 for human attention (e.g., service, maintenance, etc.).

Once the inspection of the asset 12 is complete, the UAV 14 may travel along a determined route back to the docking station 16, to the end of the planned route, or to another asset 12 for inspection. As previously discussed, as the UAV 14 travels the route, the UAV 14 may use onboard sensors (e.g., proximity sensors, laser, sonar, camera, an RGB-D camera, etc.) to identify unexpected obstructions along the route, such as other UAVs, humans, wildlife, vehicles, cleaning equipment, closed doors, etc. In other embodiments, satellite images or images received from other devices may be used to identify obstructions. If such obstructions are encountered, the UAV 14 may request the assistance of a nearby edge device 24 (e.g., e.g., routers, switches, gateway devices, internet of things (IoT) devices, or other devices connected to a network that have computing capabilities), the docking station 16, the local server 18, the remote server 20, and/or the cloud 22, or the UAV 14 may identify an alternative route on its own and follow the alternative route to the next asset or to the end of the route and conclude its mission.

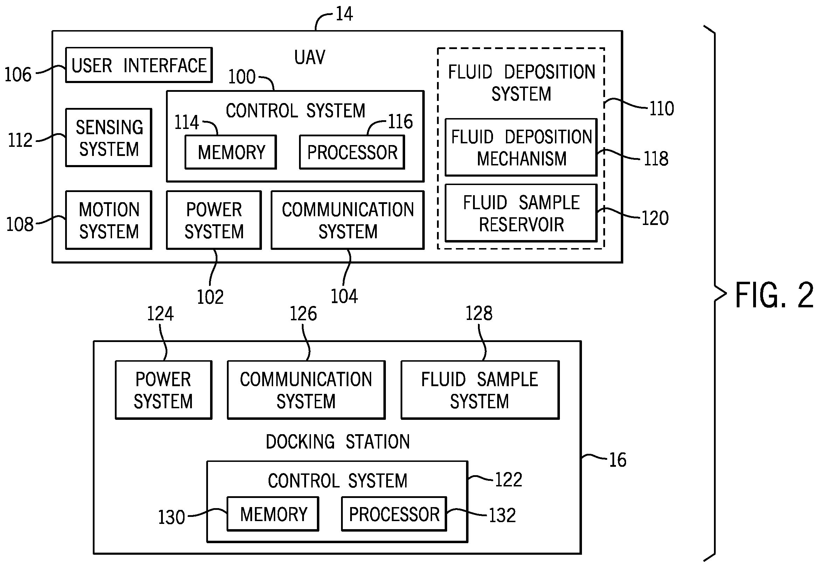

FIG. 2 is a schematic view of the UAV 14 and the docking station 16. As shown, the UAV 14 may include a control system 100, a power system 102, a communication system 104, a user interface 106, a motion system 108, a fluid deposition system 110, and a sensing system 112. Again, although illustrated in FIG. 2 as being a UAV 14, in other embodiments, the UAV 14 may instead be any other type of unmanned autonomous vehicle, such as an unmanned ground vehicle (UGV) or ground-based drone, unmanned underwater vehicles (UUV) or underwater drone, unmanned surface vehicles (USV) or uncrewed boat, and so forth.

The control system 100 may include one or more memory components 114 and one or more processors 116 and be configured to control various aspects of the UAV 14, including the various systems shown in FIG. 2 (e.g., the power system 102, the communication system 104, the user interface 106, the motion system 108, the fluid deposition system 110, and/or the sensing system 112). In some embodiments, one or more of the systems of the UAV 14 shown in FIG. 2 may also include control components, including a memory and a processor, to control some or all of the operations of the respective system. For example, the control system 100 may act in concert with the motion system 108 to receive a signal from the one or more sensors (e.g., encoders) of the motion system 108 and output a control signal to the one or more motors or movement actuators to control the movement of the UAV 14. Similarly, the control system 100 may coordinate with the sensing system 112 to receive data from the sensing system 112 and process or analyze the collected data and determine what action to take next. In further embodiments, the UAV 14 may transmit data to a local or remote server via the communication system 104. In some embodiments, the control system 100 may also perform mission planning tasks, such as navigating to a location, deciding what action to take next, and then executing the next action by coordinating the various other components of the UAV 14.

In some embodiments, the control system 100 may perform navigation and mission planning tasks. For example, the control system may receive route data indicating one or more possible routes for a mission. In some embodiments, the route data may also include data representing traffic trends along the possible routes. The control system 100 may be configured to select a route and then control the motion system 108 to navigate the UAV 14 along the selected route. Further, the control system 100 may receive data form the sensing system 112 indicating various aspects of the environment around the UAV 14 and control the motion system 108 to navigate the UAV 14 around one or more obstacles or obstructions detected. Further, the control system 100 may, on its own or with the assistance of another device, identify that a route is obstructed or otherwise impassable, identify and select an alternative route, and use the motion system 108 to navigate the UAV 14 along the route.

The power system 102 may be configured to provide power for various operations of the UAV 14. Accordingly, the power system 102 may include a replaceable or rechargeable battery, a combustion engine, a generator, an electric motor, a solar panel, a chemical-reaction-based power generation system, etc., or some combination thereof. In some embodiments, the power system 102 may be configured to draw power from the docking station 16 in the form of recharging batteries, taking on fuel or other fluids, and so forth.

The communication system 104 may be configured to communicate with devices disposed within the facility 10 (e.g., the docking station 16, the local server 18, one or more edge devices 24, one or more assets 12, a remote controller, a smart phone, a computing device, a tablet, etc.), as well as devices that may be outside of the facility 10, such as the remote server 20, the cloud 22, and so forth. For example, the communication system 104 may enable communication via a wireless network connection, a wired network connection, light detection and ranging (LIDAR) network, 4G network, 4G LTE network, 5G network, cellular data service, Bluetooth, near field communication (NFC), ZigBee, ANT+, LoRaWan, Z-wave, or some other communication protocol. In some embodiments, the communication system 104 may be configured to encrypt some or all of the data it sends out and decrypt some or all of the data it receives.

The user interface 106 may be configured to receive input from a user configuring or adjusting various settings of the UAV 14. The user interface 106 may include one or more input devices (e.g., knobs, buttons, switches, dials, etc.) and, in some cases, may include a display (e.g., a screen, array of LEDs, etc.) for providing feedback to the operator. In other embodiments, the UAV 14 may be configured by a separate off-board device (e.g., a remote control, a mobile device, a tablet, etc.) that acts as a user interface 106.

The motion system 108 actuates movement of the UAV 14 through the air or, in other embodiments, on the ground, through a liquid (e.g., water), along a surface of liquid, or some combination thereof. The motion system 108 may include one or more motors and, in some embodiments, one or more encoders. The motors may drive propellers, legs, wheels, tracks, wings, fins, etc. The encoders may sense one or more parameters of the motors (e.g., rotational speed) and provide data to a control system 100 or a controller within the motion system 108 to generate a control signal to control operation of the motors.

The fluid deposition system 110 may be configured to store fluid samples and emit the fluid samples during sensor inspection. As shown in FIG. 2, the fluid deposition system 110 may include a fluid deposition mechanism 118 and a fluid reservoir 120. The fluid reservoir 120 may be configured to store one or more samples of fluid to be emitted during sensor inspection. The fluid samples may be received via the docking station 16, a fluid sample refill station, or may be manually provided periodically by an operator. During sensor inspection, the fluid deposition system 118 may be configured to release, spray, vaporize, waft, emit, etc. the fluid samples stored by the fluid reservoir 120 into the environment around the sensor.

The sensing system 112 may include one or more sensors (e.g., tactile, chemical (e.g., gas/vapor sensors), ultrasound, temperature, laser, sonar, camera, a red, blue, green, depth (RGB-D) camera, etc.) configured to sense various qualities and collect data corresponding to the area around the UAV 14. The sensors may be used during inspection of gas sensors 12, for navigation of the UAV 14 through the facility 10, and so forth.

The UAV 14 may be configured to return to and connect to the docking station 16 when the UAV 14 is not in use. The docking station 16 may include a control system 122, a power system 124, a communication system 126, and a fluid sample system 128. The control system 122 may be configured to control operations of the docking station 16, including the various systems shown in FIG. 2 (e.g., the power system 124, the communication system 126, and the fluid sample system 128) and perform various tasks associated the UAV 14. The control system 122 may include a memory component 130 and one or more processors 132. In some embodiments, the control system 122 may be configured to receive instructions and/or plans for the UAV 14 via the communication system 126, store the instructions and/or plans in the memory 130, and provide them to the UAV 14 for implementation. Correspondingly, the control system 122 may also receive data from the UAV 14 and pass data to a local or remote computing device (e.g., the local server 18, the remote server 20, the cloud 22, and/or the one or more edge devices 24) via the communication system 126.

The power system 124 may contain an internal source of power, such as a generator or battery, and/or be connected to external power, such as a utility grid (e.g., by being plugged into a power outlet), a generator, a battery, etc. Accordingly, the power system 124 may be configured to draw power from the internal or external source of power, in some cases, store that power, use the power to run the docking station 16, and also provide power to the UAV 14 (e.g., via the UAV 14 power system 102). Accordingly, the power system 124 may charge the UAV's 14 batteries, provide fuel to the UAV 14, and so forth.

The communication system 126 may include communication circuitry configured to establish a wired or wireless connection with the communication system 104 of the UAV 14. For example, the connection may be a wireless network connection, a wired network connection, a cellular data connection, a Bluetooth connection, a Near Field Communication (NFC) connection, a ZigBee connection, an ANT+ connection, a LoRaWan connection, a Z-wave connection, or a connection via some other communication protocol. The communication system 126 may be configured to receive data from the communication system 104 of the UAV 14 while the UAV 14 is docked and/or when the UAV 14 is deployed out in the facility 10 performing inspections or other tasks. The exchanged data may be related to sensor inspection, inspection of other assets, mission planning, navigation, power supply, fluid sample supply, threat detection, obstruction detection, and so forth. Further, in some embodiments, the communication system 126 may be configured to communicate with a local or remote computing device via a wireless network connection, a wired network connection, a cellular data connection, a Bluetooth connection, a Near Field Communication (NFC) connection, a ZigBee connection, an ANT+ connection, a LoRaWan connection, a Z-wave connection, or a connection via some other communication protocol. The local or remote computing device may be a desktop computer, a laptop computer, a mobile device, a tablet, a remote controller, a server, an edge device, a cloud-based computing device, etc. In such embodiments, the communication system 126 may be configured to provide and/or receive data regarding the operation of the UAV 14 to the local or remote computing device. For example, the local or remote computing device may be used by an operator to control the UAV 14, either directly, or via the docking station 16.

The fluid sample system 128 may maintain one or more reservoirs of fluid samples and provide fluid samples to the UAV 14 to emit during sensor inspection. In some embodiments, the fluid sample system may store large quantities of the fluid sample materials and use a pump or some other actuator to provide fluid samples to the UAV 14. In such embodiments, the fluid samples may be stored in a reservoir and pumped into the fluid sample reservoir 120 of the UAV 14. However, in other embodiments, the fluid samples may be pre-packaged and the fluid sample system 128 may include an actuator that provides the pre-packaged fluid samples to the fluid deposition system 110 of the UAV 14. In such embodiments, the fluid sample system 128 may also be configured to retrieve used fluid sample packaging from the UAV 14 after the fluid samples have been emitted. The fluid samples may include a plurality of fluid samples disposed in respective sample containers, wherein the fluid samples may correspond to each of the gases being sensed by the various sensors 12.

It should be understood that the embodiments of the UAV 14 and docking station 16 shown and described with regard to FIG. 2 are merely examples As such, embodiments having different combinations of components are also envisaged. And, again, although illustrated in FIG. 2 as being a UAV 14, in other embodiments, the UAV 14 may instead be any other type of unmanned autonomous vehicle, such as an unmanned ground vehicle (UGV) or ground-based drone, unmanned underwater vehicles (UUV) or underwater drone, unmanned surface vehicles (USV) or uncrewed boat, and so forth.

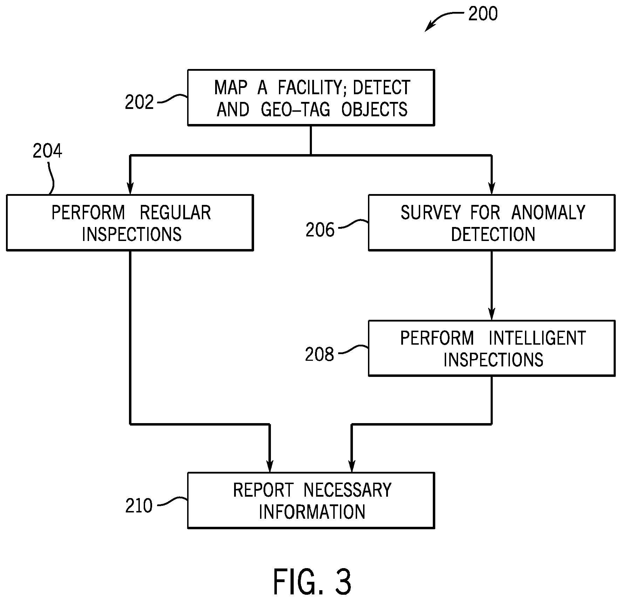

As described in greater detail herein, the UAV 14 illustrated in FIGS. 1 and 2 (or other type of unmanned autonomous vehicle) may utilize a self-learning autonomous robotics workflow and an ecosystem of customized AI models and algorithms that enable such a workflow. FIG. 3 is a flow chart of an example method or process flow 200 for such self-learning UAVs 14. At block 202, the UAV 14 maps the facility 10, and detects and geo-tags objects. The UAV 14 is allowed to explore and map the facility 10 and gather necessary information using onboard sensors, such as LiDAR, camera(s), infrared, etc. Objects are identified using AI algorithms and automatically geo-tagged. The locations of each unit or object can be stored in a database on the UAV 14. The UAV 14 can collect various types of data, such as RGB and thermal images, video, audio, and/or point concentrations of hazardous gases such as SO₂ and H₂S. A base dataset is collected and formed for various types of data.

Once the facility 10 is mapped, the UAV 14 can regularly complete two types of surveys. At block 204 of the process 200, the UAV 14 performs regular inspections. For regular inspections, the UAV 14 collects and post-processes data from various equipment, for example, gauge and level readings. At block 206, the UAV 14 surveys and monitors for anomaly detection. If an anomaly is detected, at block 208 the UAV 14 automatically moves toward the abnormal activity for further investigation. Examples of intelligent surveys include abnormal sounds from equipment, higher than usual gas concentrations, and hot or cold spot anomalies on equipment. At block 210, the UAV 14 reports necessary information from regular inspections and/or intelligent inspections. The UAV 14 can improve its efficiency with increased data collected from regular surveys and synthetically generated data from simulations.

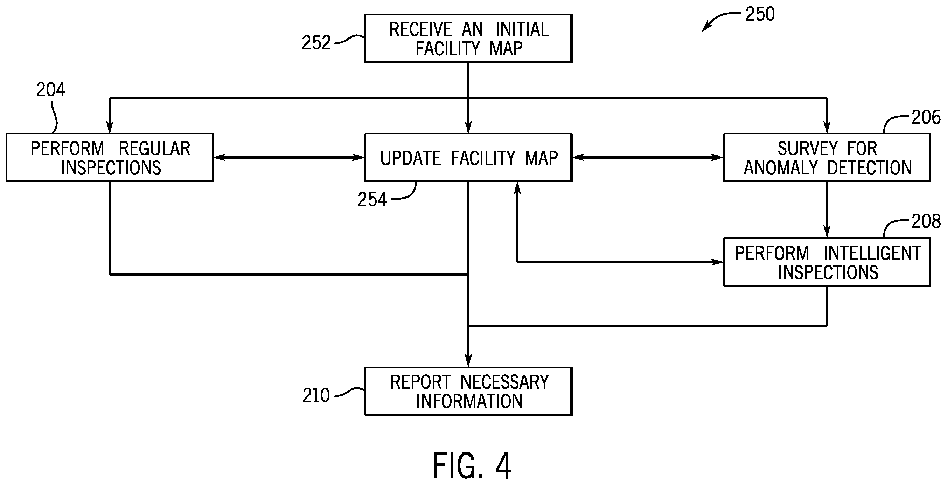

FIG. 4 is a flow chart of another example method or process flow 250 for such self-learning UAVs 14. As shown in and described with respect to FIG. 3, the UAV 14 can map the target facility 10. Alternatively, as shown in FIG. 4, the UAV 14 may be provided with an initial map of the facility at block 252. The provided initial map may be complete, or partial or incomplete. The UAV 14 may update the map as needed, as indicated in block 254. Based on the provided initial map and/or the updated map, the UAV 14 performs regular inspections at block 204, surveys for anomaly detection at block 206, performs intelligent inspections at block 208, and reports necessary information at block 210.

In some configurations, the UAV 14, AI algorithms or models, or workflow can provide or allow for preventive action using predictive anomaly detection and collaborative learning. For example, the UAV 14, algorithms, models, or workflow may be capable of predicting an anomaly based on measurements in the near past and/or distance past. In other words, an anomaly may not have occurred yet, and therefore an actual anomaly is not detected by the UAV 14, but an anticipatory or preventive action may be triggered based on learnings from past measurements. In some configurations, systems and methods according to the present disclosure are collaborative. In other words, multiple agents (e.g., UAVs 14) may each learn a portion of the map and share their respective portions with the other agents to build a larger or more complete map. As another example, detected or predicted anomalies may be shared, such that anomaly detection or prediction, and action in response to a detected or predicted anomaly, can be undertaken by different agents or UAVs.

The use of self-learning autonomous inspection systems and methods described herein in oil and gas facilities (as well as other energy sectors, such as electric power, nuclear power, renewables, and so forth) can advantageously help reduce operation costs and carbon footprint, improve operation safety by reducing human exposure to hazardous situations and forecasting potential equipment failures, optimize production and maintenance, improve fully autonomous operation capabilities, and prevent or reduce the likelihood of unwanted shut down.

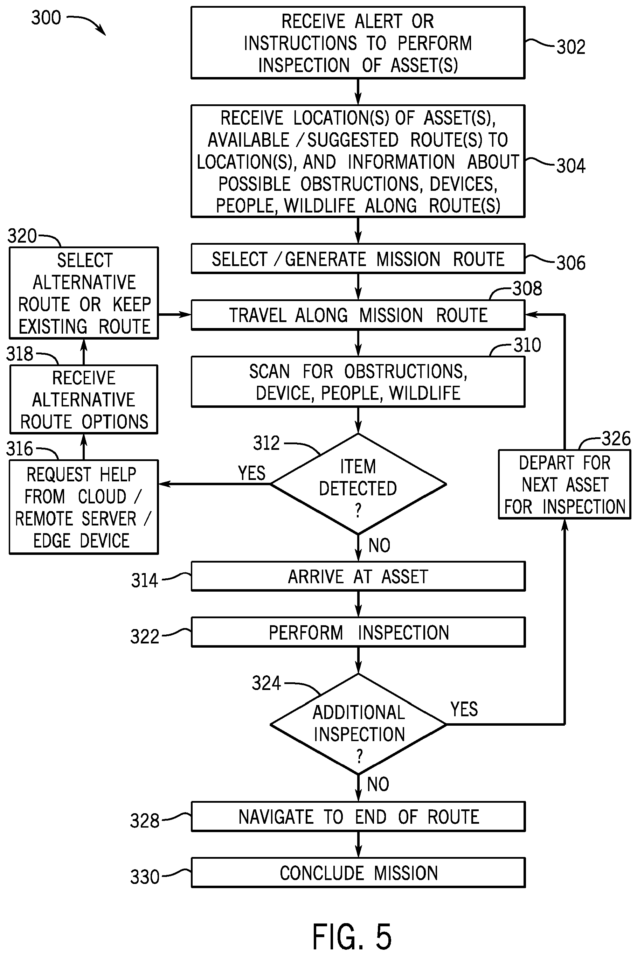

FIG. 5 is a flow chart of a process 300 for performing a short-notice inspection of one of the assets 12 of FIG. 1 with the UAV 14 shown in FIGS. 1 and 2. At block 302, an alert, alarm, or request for inspection is received that triggers a short-notice inspection. In other embodiments, the inspection may be an unplanned inspection, an unscheduled inspection, an emergency inspection, a real-time generated inspection (or something along these lines), an alert/alarm triggered inspection, or control system triggered inspection (e.g., based on various sensors data and/or facility conditions indicating a potential real-time problem). The alert or alarm may be generated by an asset 12, or a monitoring device, such as a sensor disposed near an asset that is experiencing a problem or a condition. Alternatively, the request for inspection may have been generated by a human present near the asset 12, a human monitoring data associated with the asset 12, etc. Upon receipt of an alert or instructions, the docking station 16 may provide a quick charge of the UAV 14 if additional charge is needed.

At block 304, data pertaining to the inspection is received. The data may include, for example, locations of one or more assets 12 to be inspected, available and/or suggested routes to the one or more locations, traffic information about possible obstructions, devices, people, wildlife, etc., along the available routes, and so forth. The data may be received, for example, from the docking station 15, the local server 18, the remote server 20, the cloud 22, and/or one of the edge devices 24.

At block 306, the process 300 selects or generates a mission route based on the data received at block 304. In some embodiments, route selection may be based on data collected from other devices, such as satellite images, security cameras, maps of the facility, etc. The selection may be based on distance, predicted speed, predicted time, likelihood of traffic/obstructions, and so forth. At block 308, the UAV 14 departs on the mission and travels along the selected route. As the UAV 14 travels along the route, at block 310, the UAV 14 may utilize one or more onboard sensors (e.g., proximity sensors, laser, sonar, camera, an RGB-D camera, etc.) to identify unexpected obstructions along the route, such as other UAVs 14, humans, wildlife, vehicles, cleaning equipment, closed doors, etc. At decision 312, the UAV 14 determines whether an obstruction or other item has been detected. In some embodiments, the UAV 14 may use onboard sensors to collect data as it progresses along the route. For example, the UAV 14 may scan RFID tags, badges of employees, take images of faces of humans present, etc., to identify the presence of unauthorized people, items (e.g., food and/or drinks, certain materials, scooters, etc.), wildlife, and so forth, and report back to the local server 18, the remote server 20, the cloud 22, and/or one of the edge devices 24. If not, at block 314, the UAV 14 proceeds along the route and arrives at the asset 12.

If the UAV 14 encounters an obstruction, the UAV 14 may stop in its place or identify a place to stop, and transmit a request for assistance to a nearby edge device 24, the docking station 16, the local server 18, the remote server 20, and/or the cloud 22 (block 316). For example, if the UAV 14 requests help from a nearby edge device 24, the UAV 14 may transmit route data to the edge device 24, along with data collected by the UAV 14 associated with the unexpected obstruction. The data may include, for example, video data, sonar data, and so forth. The edge device 24 may analyze the received data and suggest an alternative route or suggest that the UAV 14 continue along the planned route and go around the obstruction (block 318). If the UAV 14 chooses to default to an alternative route, the UAV 14 may determine how to get to the alternative route (block 320) and then proceed along the route (block 308). However, in some embodiments, the recognition of the obstruction and decision to default to an alternative route may be made entirely onboard the UAV 14.

At block 322, the UAV arrives at the asset 12 and performs the inspection. For example, the UAV may utilize onboard sensors (e.g., tactile, chemical, ultrasound, temperature, laser, sonar, camera, an RGB-D camera, etc.) to inspect the asset 12. The inspection may include, for example, checking connections, tag numbers on cables and/or sensors, grounding, checking for abnormal readings (e.g., current, voltage, power, etc.), lack of power, lack of signal, signs of damage, etc. In some embodiments, the UAV 14 may be configured to communicatively couple to the asset 12 (e.g., via a wireless network connection, a wired network connection, cellular data service, Bluetooth, NFC, ZigBee, ANT+, LoRaWan, Z-wave, or some other communication protocol) and collect data from the asset 12. Collected data may be transmitted to the docking station 16, the local server 18, the remote server 20, the cloud 22, and/or the one or more edge devices 24 while the UAV 14 is in the presence of the asset 12, or after completion of the mission. In some embodiments, the UAV 14 may flag the asset 12 for human attention (e.g., service, maintenance, etc.).

At decision 324, the process 300 determines whether the mission includes additional inspections to perform. If the mission does include additional inspections to perform, the process 300 proceeds to block 326 and the UAV 14 proceeds along the route to the next asset 12 to be inspected. If the mission does not include additional inspections to perform, the process 300 proceeds to block 328 and the UAV 14 travels along the route back to the docking station 16 or to the end of the planned route. The return route may be the same as the route to the asset 12 (e.g., an out and back route) or the return route may be different from the route to the asset 12 (e.g., forming a loop). As with the route to the asset 12, the UAV 14 may use onboard sensors to scan for obstructions on the return trip to the end of the route and request help from the local server 18, the remote server 20, the cloud 22, and/or one of the edge devices 24, or develop an alternative route itself if an obstruction is encountered. At block 330, the UAV 14 reaches the end of the route and concludes the mission.

The disclosed techniques include navigating a UAV 14 through a facility 10 to perform a short-notice or on demand inspection of an asset 12 experiencing a problem or a condition. Specifically, the UAV 14 receives an alert or instructions to perform a short-notice inspection of an asset 12. The UAV 14 receives a location of the asset 12, along with one or more available routes to the asset 12, and in some cases, traffic data regarding possible obstructions, devices, people, wildlife, etc., that may be encountered along the one or more paths. The UAV 14 may select a route and depart along the route. While traversing the route, the UAV 14 may utilize onboard sensors to monitor its environment and identify any obstructions that it may encounter as it traverses the route. If the UAV 14 encounters an obstruction (e.g., an item that prevents the UAV 14 from continuing on the path), the UAV 14 may request assistance from a nearby computing device, such as an edge device 24. The UAV 14 may pass route data and data form the onboard sensors to the edge device 24, which may analyze the data and generate one or more alternative routes, or indicate that the UAV 14 may continue along the original route. The UAV 14 may then proceed along the original route or the alternative route to the asset 12 to perform inspection, which may be done using one or more onboard sensors, and/or establishing a communicative connection with the asset 12. Once the inspection is completed, the UAV 14 continues along the route to the next asset 12 for inspection or to the end of the route. Technical effects of implementing the disclosed techniques include faster and more efficient navigation of UAVs 14 through facilities 10 when a route has not already been programmed.

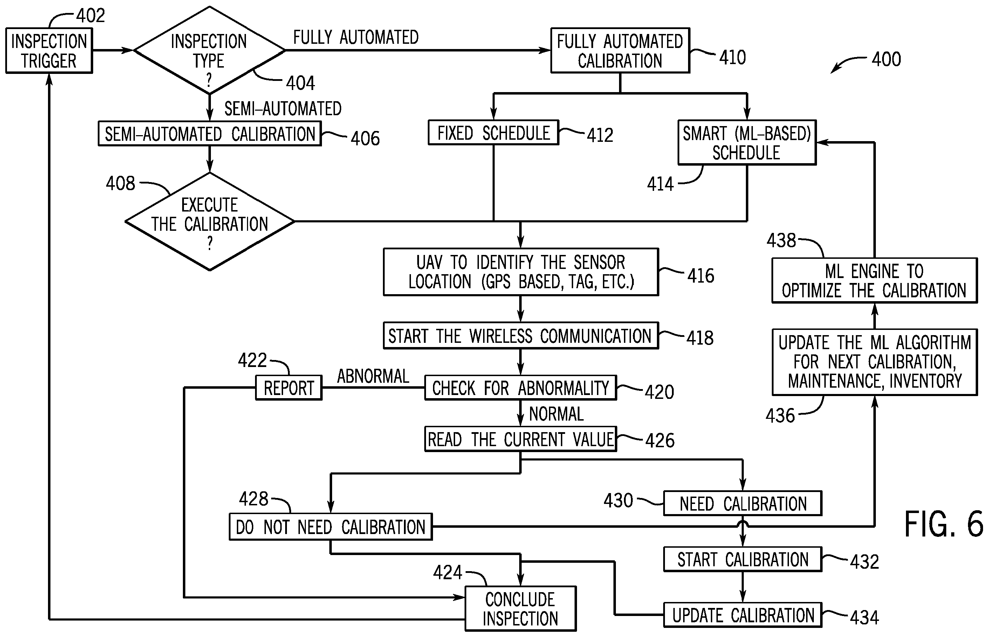

FIG. 6 is a flow chart of a process 400 for performing sensor inspection (e.g., when the asset 12 is a sensor) via the UAV 14 shown in FIGS. 1 and 2. At block 402, inspection is triggered. Sensor inspection may be performed on a set schedule (e.g., as defined by policies set forth my by the entity that manages the facility, local, state, or federal law or regulation, standard setting organization guidelines, industry best practices, a machine learning-base algorithm, etc.), after a set number of cycles, on demand, in response to some triggering event, upon anomalous data being collected, and so forth.

At decision 404, the process 400 determines the type of inspection to be performed. If the calibration decision is semi-automated (block 406), the process 400 asks the operator whether calibration should be performed during the inspection (block 408). One or more inputs may then be provided by the operator specifying whether or not calibration is to be performed, regardless of the values returned by the sensor during inspection or calibration is otherwise recommended. The operator's decision may be based, for example, on a schedule maintained or otherwise accessible by the operator (e.g., a computerized maintenance management system (CMMS)), a previous noted issue with the sensor 12, or some other factor.

If the calibration decision is fully automated (block 410), the process determines whether calibration is performed on a fixed schedule (e.g., after a certain amount of time or a certain number of cycles have occurred since the last calibration, etc.) or on a smart (e.g., machine learning-based) schedule (e.g., the sensor 12 is nearing the end of its life cycle or a maintenance cycle and should be calibrated more often, ambient temperatures have been unusually low or high, which may be affecting the sensor readings and so forth). If the calibration occurs on a fixed schedule (block 412), the process 400 may reference a fixed calibration schedule (e.g., a CMMS) and determines whether calibration is to be performed. If the calibration occurs on a smart schedule (block 414), the process 400 may reference a smart calibration schedule (e.g., CMMS) and determine whether calibration is to be performed.

At block 416, the UAV 14 identifies a location of a sensor 12 to be inspected via GPS coordinates, a tag, a series of waypoints, and set path, etc. and receives or develops one or more routes to the sensor 12. In some embodiments, the location may be provided by the operator, retrieved from a CMMS, etc. If the UAV 14 receives multiple routes to the sensor 12, the UAV 14 may select a route to the sensor 12. In some embodiments, the UAV 14 may be configured to inspect multiple sensors on a single trip. After a route has been selected, the UAV 14 receives approval to start the mission and departs the docking station 16 or a location from a prior task and begins navigating to the sensor to be inspected. If the UAV 14 encounters a problem along the way to the sensor 12, such as a person or object obstructing the route, the UAV 14 may be configured to default to an alternate route and continue toward the sensor 12, as described in greater detail herein.

Once the UAV 14 arrives at the sensor 12, at block 418, the UAV 14 establishes a communicative connection with sensor via WiFi, Bluetooth, Zigbee, LoRaWan, Z-Wave, etc. After the UAV 14 has communicatively coupled to sensor 12, the UAV 14 may put the sensor 12 into an inspection mode, disconnect the sensor 12 from the facility's 10 loop, or otherwise cause the sensor 12 to indicate that the sensor 12 is being inspected and/or calibrated. Accordingly, if the sensor 12 detects certain gases are present during inspection, typical responses to the gas being detected under normal circumstances (e.g., shutting down the facility, evacuating the facility, sending an inspection robot to the area, turning on fire sprinklers, notifying emergency response teams, etc.) may not be implemented.

Once connected, at block 420 the UAV 14 checks the sensor 12 for abnormalities, such as abnormal readings (e.g., current, voltage, power, etc.) or other abnormal characteristics/behaviors (e.g., no power, lack of output, damaged sensor, etc.). If abnormalities are detected, the UAV 14 may report the abnormalities (block 422), flagging the sensor 12 for service, replacement, or other human intervention. The process 400 then proceeds to block 424 and concludes inspection.

If no abnormalities are detected, at block 426, the UAV 14 reads the current value of the sensor 12 and makes a determination whether or not to calibrate the sensor 12. The current reading of the sensor 12 may be based on ambient air around the sensor 12, or a fluid sample emitted by the UAV 14. For example, the UAV 14 may release one or more samples of known gases or fluids and monitor how the sensor 12 responds to the sample. The UAV 14 may compare the response of the sensor 12 to the known qualities of the released sample and determine whether quality measured by the sensor 12 is within a threshold amount or a number of standard deviations of the known quality. If the output of the sensor 12 is within a threshold amount or a number of standard deviations of the known quality, and calibration is not otherwise scheduled, the UAV 14 determines that the sensor 12 is not in need of calibration. If it was determined at blocks 406-414 that calibration of the sensor 12 was not needed, and the current value of the sensor 12 was as expected, the process determines that calibration is not needed (block 428) and proceeds to block 424 to conclude the inspection.

If the current value of the sensor 12 is not as expected, and/or it was determined at blocks 406-414 that calibration of the sensor 12 was to be performed regardless of the reading of the sensor 12, then the process determines at block 430 that the inspection is to include calibration. Accordingly, at block 432, the UAV 14 begins calibration. For example, the UAV 14 may emit multiple samples of known concentrations of one or more gases, measure the sensor's 12 responses to each of the emitted samples, compare the sensor's 12 responses to the known qualities of the emitted samples, and generate a calibration curve. The calibration curve may then be used to update the calibration of the sensor 12 (block 434). In some embodiments, once the calibration of the sensor 12 has been completed, the UAV 14 may retest the sensor's response to a gas sample or the ambient air around the sensor 12 to determine if the sensor 12 is outputting reasonable values. If so, the UAV 14 concludes the calibration process. If not, the UAV 14 repeats the calibration process or flags the sensor 12 for human intervention and concludes the inspection process.

In some embodiments, the UAV 14 may be configured to forego emitting gas samples in the facility 10 and instead stimulate the sensor 12 in a way that simulates how a sensing element of the sensor 12 responds to a gas sample. This may include, for example, applying a sequence of known voltages, currents, resistances, capacitances, impedances, etc., and then use the response of the sensor 12 to those voltages, currents, resistances, capacitances, impedances, etc. to generate a calibration curve. In some embodiments, once the calibration of the sensor 12 has been completed, the UAV 14 may retest the sensor's 12 response a known stimulation (e.g., voltage, current, resistance, capacitance, impedance, etc.) to determine if the sensor 12 is outputting reasonable values. If so, the UAV 14 concludes the calibration process. If not, the UAV 14 repeats the calibration process or flags the sensor 12 for human intervention and concludes the inspection process.

If the calibration of the sensor 12 is updated (block 434), in some embodiments, the process 400 may use collected data to update a machine learning algorithm for the next calibration, maintenance, and/or inventory (block 436), which may be used to optimize the calibration and/or inspection schedule (block 438).

At block 424, the UAV 14 communicatively decouples from the sensor 12 and concludes the inspection of the sensor 12. In some embodiments, a CMMS may be updated by the UAV 14, the docking station 16, the local and/or remote computing devices, or some combination thereof, to reflect that the sensor 12 has been inspected and/or calibrated. In some embodiments, the CMMS may also be updated with data collected during the inspection and/or calibration.

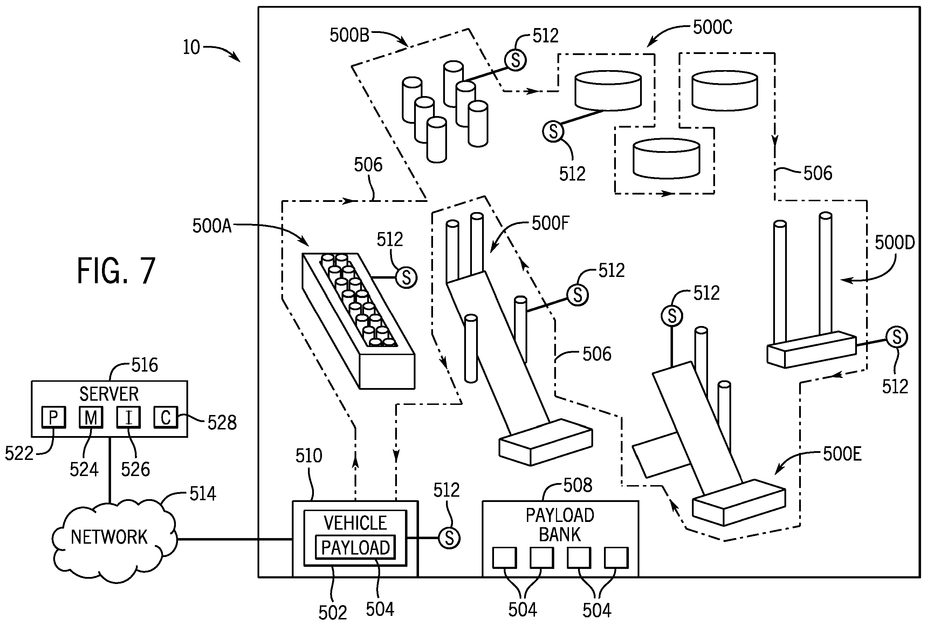

FIG. 7 illustrates a processing facility 10 having one or more processing sub-systems 500 that are configured to process oil/gas and/or perform various other functions. For example, during operation of the processing facility 10, oil and/or gas may be passed from one processing sub-system 500 to another to treat, clean, process, and prepare the oil and/or gas for downstream consumption. Each of the processing sub-systems 500 may include a number of components (e.g., valves, conduits, tanks, gauges, compressors, and so forth) that may be utilized to process the oil and/or gas or convey the oil and/or gas to another location within the processing facility 10. Each of the sub-systems 500 and the components thereof may correspond to a potential leak source and/or abnormality source. For example, during operation of the processing facility 10, liquid and/or gas may be released (e.g., leak) from a valve of a processing sub-system 500, a fluid connection (e.g., flanged fluid connection) between conduits, a fluid seal (e.g., o-ring, gasket, etc.), a welded joint, and/or any location susceptible to fluid leaks. Similarly, during operation of the processing facility 10, a compressor of a processing sub-system 500 may experience an equipment failure due to high load or other conditions associated with the processing facility 10. As used herein, an "abnormality," "abnormality detection" or an "abnormality detection task" may refer to detection of one or more issues (e.g., equipment failures, hot spots) present in the equipment of the processing facility 10, and thus may be distinct from leak detection or a leak detection task.

To identify potential leak sources and/or abnormality sources, an automated uncrewed vehicle (AUV, otherwise referred to herein as an unmanned autonomous vehicle) 502 having one or more payloads 504 may patrol the processing facility 10 by traversing a pre-defined path 506 (e.g., similar to the routes 26, 28, 30, 32 described above with reference to FIG. 1). The pre-defined path 506 may be selected from a plurality of pre-defined paths in the processing facility 10, wherein each pre-defined path 506 may include certain inspections that rely on one or more common payloads 504. For example, one of the pre-defined paths 506 may focus on leak detections using visual sensors, such as cameras, whereas another one of the pre-defined paths 506 may focus on thermal detections using temperature sensors. In certain embodiments, the pre-defined path 506 may be generated prior to a patrol by the AUV 502 based on a schedule, user input, weather conditions, feedback from various equipment in the processing facility 10 (e.g., alerts, alarms, performance changes, control system feedback, etc.), hours of operation of various equipment, or any combination thereof.

As described in greater detail herein, the AUV 502 may be any type vehicle that is capable of traversing the pre-defined path 506 and capturing and/or recording data associated with the processing facility 10 without human intervention. For example, the AUV 502 may include an unmanned ground vehicle (UGV) or ground-based drone, an unmanned aerial vehicle (UAV) 14 or aerial drone (as described in greater detail above), an unmanned underwater vehicle (UUV) or underwater drone, an unmanned surface vehicle (USV) or uncrewed boat, or any combination thereof, having a propulsion system (e.g., motor driven wheels, legs, propellers) that enables the AUV 502 to traverse the predefined path 506 and capture data associated with the processing facility 10. The AUV 502 may be designed to traverse the pre-defined path 506 entirely in the air along an aerial path, entirely on the ground along a ground path, entirely on or under water along a water path, or a combination thereof. For example, the AUV 502 may travel along the pre-defined path 506 as a baseline path of travel, wherein the AUV 502 may be designed to deviate from the pre-defined path 506 to avoid obstacles or environmental interference and to generally improve inspections. The AUV 502 may include a controller having a processor and a memory capable of storing instructions that cause the AUV 502 to travel the pre-defined path 506 based on one or more tasks to be performed, as described in greater detail below.

In certain embodiments, the payload(s) 504 may correspond to a particular inspection device used to capture and/or record data associated with the processing facility 10. For example, the payload(s) 504 may include point sensors that are sensitive to a specific gas (e.g., acid gases such as H₂S or CO₂), microphones that are capable of recording audio from the equipment at each of the sub-systems 500, optical devices capable of capturing image and/or video data (e.g., camera, thermal infrared camera, optical gas imaging camera (OGI), etc.), and/or other sensors (e.g., temperature sensor, moisture sensor, light sensor, vibration sensor, flame sensor, fluid flow sensor, motion sensor, pressure sensor, fluid composition sensor, etc.) capable of capturing data associated with the processing facility 10. The payload(s) 504 also may include supporting tools, such as one or more lights (e.g., LEDs) to provide illumination in dark conditions, shades or light filters to reduce glare in bright conditions, stabilizers (e.g., arms, cables, magnets, etc.) to stabilize a position of the AUV 502 during inspections, wind shields to block wind interference, precipitation shields to block rain, sleet, or snow during inspections, automated tools (e.g., robotic arms, linear drives, torque tools, etc.) to engage equipment, or any combination thereof. It should be noted that each of the payloads 504 used to collect data associated with the processing facility 10 may include one or more of the devices listed above, and each of the devices included in a particular payload 504 may be associated with one or more tasks that the AUV 502 is scheduled to perform. Further, the examples above are not intended to be limiting and the payloads 504 may include any other devices and/or sensors that may capture data associated with the processing facility 10. The sensors of the payloads 504 may be used to sense conditions in a particular area inside or outside of equipment of the processing facility 10. For example, the sensors of the payloads 504 may monitor conditions in the air surrounding the equipment and/or conditions on the surface of the equipment.

As noted above, each of the payloads 504 may be associated with performing a specific set of tasks, and the tasks may be based on the inspection mission selected for the AUV 502. For example, if the AUV 502 is programmed to perform a gas leak inspection mission, the AUV 502 may carry a payload 504 that enables the AUV 502 to perform the set of tasks associated with the gas leak inspection mission. Thus, for the gas leak inspection mission, the payload 504 may include one or more optical gas imaging (OGI) cameras, one or more point sensors, or a combination thereof, while for a liquid leak inspection mission, the payload 504 may include one or more acoustic devices (e.g., microphone). In some embodiments, the AUV 502 may be programmed to perform multiple different inspection missions on a single pass of the pre-defined path 506, and thus may carry multiple payloads 504 based on the inspection missions and the respective set of tasks associated with each inspection mission. In other embodiments, the AUV 502 may be programmed to perform a single inspection mission such that AUV 502 carries the payload 504 for performing the set of tasks associated with the inspection mission.

The pre-defined path 506 (e.g., auto walk, mission) associated with a particular inspection mission may be designed based on facility geometry and/or equipment location, such that different pre-defined paths 506 may be utilized based on a type of inspection mission and/or which set of tasks are to be performed. For example, if the AUV 502 is programmed to perform a gas leak detection task, the AUV 502 may carry a first payload 504 and traverse a first pre-defined path 506 to collect data from the sub-systems 500. The first pre-defined path 506 may direct the AUV 502 to specific locations associated with the various sub-systems 500, such that the AUV 502 may collect relevant data indicative of potential leak sources. For example, the first predefined path 506 may guide the AUV 502 towards specific components of each of the sub-systems 500A-500F that are susceptible to leaks (e.g., valves, high-pressure tanks, fluid connections, fluid seals, pumps, compressors, etc.). However, if the AUV 502 is programmed to perform a confirmation task (e.g., capture images of gauges disposed throughout the processing facility 10), then the AUV 502 may traverse a second predefined path 506 that is different from the first predefined path 506. The second predefined path 506 may direct the AUV 502 to different locations that are associated with different components (e.g., gauges) of the various sub-systems 500A-500F, such that relevant data may be obtained, as described in greater detail below. The gauges may include, for example, pressure gauges, temperature gauges, flow rate gauges, or any combination thereof. The AUV 502 may be programmed to traverse the pre-defined path 506 periodically (e.g., every hour, every 2 hours, etc.), and in some embodiments, may periodically alternative between certain pre-defined paths 506 based on the respective inspection mission the AUV 502 is programmed to perform.

Upon receiving an instruction to perform a particular inspection mission, the AUV 502 may retrieve one or more payloads 504 from a payload bank 508 and then may travel to each of the sub-systems 500 along the pre-defined path 506. In some embodiments, the AUV 502 may automatically retrieve the payload 504 from the payload bank 508 using a positioning system, as described in greater detail below. In other embodiments, an operator may be tasked with coupling a payload 504 to the AUV 502. Upon reaching a particular sub-system 500A-500F (e.g., group of equipment), the AUV 502 may perform a series of pre-defined tasks based on the inspection mission the AUV 502 is programmed to perform. The series of tasks may correspond to collecting data (e.g., image data, video data, acoustics data, gas concentration or composition data, thermal imaging data, thermal data, etc.) from different angles and distances via the payload 504 based on the inspection mission. For example, when performing a gas leak inspection mission, the AUV 502 may approach the sub-system 500A along the predefined path 506 and perform tasks associated with determining whether a gas leak is present including capturing video or image data (e.g., infrared, thermal, digital) from different angles and distances, capturing optical gas imaging data, positioning point sensors at different locations to determine a concentration of gas in the air, and the like, at the sub-system 500A. Similarly, when performing a liquid leak inspection mission, the AUV 502 may approach the sub-system 500A along the pre-defined path 506 and perform tasks associated with determining whether a liquid leak is present including recording acoustic data associated with the sub-system 500A, as described in greater detail below. Upon performing the set of tasks at each of the sub-systems 500A-500F on the pre-defined path 506, the AUV 502 may return to a charging station 510 before being deployed on another inspection mission associated with the processing facility 10. Upon receiving instructions to perform a different inspection mission, the AUV 502 may exchange a current payload 504 carried by the AUV 502 with a different payload 504 from the payload bank 508 to perform the set of tasks associated with the new inspection mission before departing on the pre-defined path 506.

In some embodiments, the AUV 502 may also include one or more environmental sensors 512 in addition to the payload 504, and the sensors 512 may be utilized to collect data associated with the ambient conditions around the processing facility 10. In other embodiments, the various sub-systems 500A-500F may include environmental sensors 512 configured to collect environmental data and communicate the data to the AUV 502 such that data captured during an inspection mission may be optimized, as described in greater detail below. The environmental sensors 512 may be any type of sensor capable of measuring precipitation (e.g., rain, sleet, snow, etc.), temperature, light (e.g., sunlight or ambient light conditions), moisture content or humidity, pressure, motion, wind speed, wind direction, seismic activity, ground water (e.g., flooding), people and animals (e.g., presence, position, and motion), and the like, and such data may be communicated to and processed by the AUV 502 to optimize data capture during the inspection mission, as described in greater detail below. For example, the environmental sensors 512 may monitor for interference caused by birds, dogs, cats, deer, hogs, horses, cattle, or other animals.

In certain embodiments, the AUV 502 may include a machine learning (ML) and/or artificial intelligence (AI) model to facilitate and/or optimize data capture during an inspection mission by, for example, self-learning from previously collected data. The ML and/or AI model may utilize data collected from the sensors 512 associated with the AUV 502 and/or the sub-systems 500A-500F, as well as data collected from one or more sensors included in the payload 504 carried by the AUV 502 to determine optimized parameters from which to capture data. Indeed, capturing data (e.g., thermal infrared video or images, gas concentration data, thermal data, acoustic data, vibrational data) such that leaks and/or abnormalities may be detected may depend on several parameters including the distance from the AUV 502 to the equipment associated with the anomaly, the data capture angle at which the payload 504 retrieves data, and/or the background associated with a captured image or video. As the distance from a potential leak source increases, the probability of detecting a leak may decrease. Similarly, depending on gas plume temperature and mass rate, the background of the image may be a relevant factor for thermal infrared imaging and/or video. For example, an optimal background may correspond to a background in which the temperature difference between the background and the gas plume is highest. Further, an optimal background may correspond to a background with a fewest number of moving objects or equipment. Accordingly, an optimal data capture angle may correspond to an angle of data capture in which the background has fewer moving objects and a high temperature differential. Further, other environmental factors may affect the data capture process such as wind velocity, wind direction, amount of light, amount of cloud cover, and the like. For example, when using thermal infrared imaging techniques, detection of gas leaks may be increased when the data capture angle is perpendicular to the wind direction. As another example, when using point sensors to detect a concentration of gas in the air, it may be beneficial to position the payload 504 downwind of the gas plume such that the gas molecules in the gas plume are directed across the point sensor.

Upon receiving data indicative of the environmental conditions from the sensors 512 and/or data associated with a particular data capture location, the ML and/or AI model may dynamically process the data in real-time to determine an optimized data capture location to capture data associated with a particular sub-system 500A-500F. For example, the ML and/or AI model may determine that a current data capture location provides images with a low temperature differential between the background and the gas plume such that a gas leak in undetectable. Based on the current environmental conditions, the AUV 502 may determine that an optimal data capture location corresponds to a location in which the temperature differential between the background and the potential gas leak source is greater than a threshold value. In certain embodiments, the ML/ AI model may determine that an optimal data capture location corresponds to a location in which less than a threshold number of moving objects are in the background and/or a location that is substantially perpendicular to the prevailing wind direction. In some embodiments, the ML/AI model may use a combination of the factors discussed above to determine an optimal data capture location. Upon determining an optimal data capture location, the ML/ AI model may instruct the payload 504 associated with the AUV 502 to collect additional data from the optimal image capture location (e.g., at a specified distance and angle), thereby optimizing data capture for gas leak detection at a particular sub-system 500A-500F. That is, the AUV 502 may be configured to capture data according to the pre-defined path 506, and may dynamically process data received from the sensors 512 and/or the payload 504 to optimize data capture (e.g., modify data capture location) based on the current conditions associated with the processing facility 10.

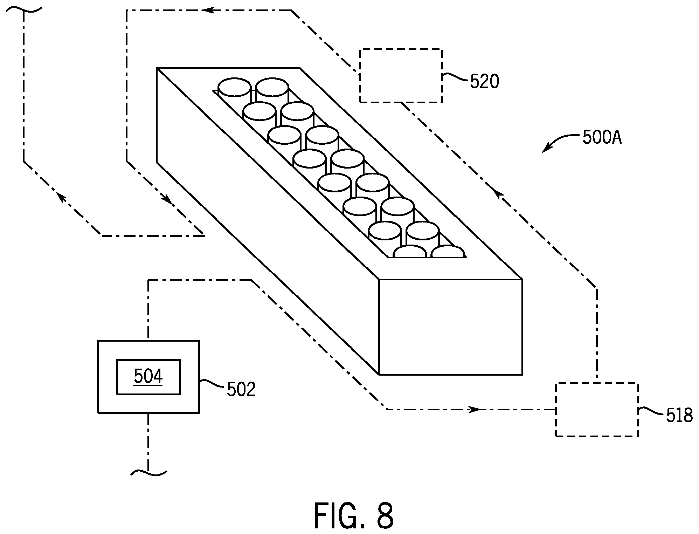

For example, as shown in FIG. 8, the AUV 502 may be programmed to perform a gas leak inspection mission, and thus may carry a payload 504 that includes one or more thermal infrared imaging devices (OGI camera, infrared camera, thermal camera) configured to capture image and/or video data of the processing facility 10 and/or one or more point sensors configured to detect a concentration of gas in the air surrounding the processing facility 10. The AUV 502 may be programmed to perform a specific set of tasks at the sub-system 500A, including capturing image data from specific locations associated with the equipment of the sub-system 500A and capturing gas concentration data using the point sensors in the payload 504. As the AUV 502 receives data indicative of the environmental conditions, the AUV 502 may identify a first optimal data capture location 518 and/or a second optimal data capture location 520, each associated with performing a specific sub-set of tasks of the set of tasks assigned to the AUV 502 at the sub-system 500A. The first optimal data capture location 518 may be associated with an image capture sub-set of tasks and thus may correspond to a location in which a temperature differential between the gas leak source and the background is greater than a threshold temperature, a location within a threshold distance of the leak or abnormality (e.g., within 10 feet, within 5 feet), a location in which the payload 504 (e.g., data capture device) is oriented perpendicularly to the wind direction, a location in which a number of moving objects in the background is less than a threshold number, and the like. The second optimal data capture location 520 may be associated with a gas concentration capture sub-set of tasks, and thus may correspond to a location within a threshold distance of a potential gas leak source and downwind of the potential gas leak source such that the gas plume contacts the point sensor. It should be noted that as environmental conditions change, the optimal data capture locations 518, 520 may also change to reflect a new location at which data may be captured, which may be associated with increased detection of abnormalities and/or leaks associated with the sub-system 500A. Further, in some embodiments, AUV 502 may determine any number (e.g., three, four, five, six, or more) of optimal data capture locations based on the inspection mission and the different tasks assigned to the AUV 502.

Returning to FIG. 7, upon collecting the data associated with one or more of the sub-systems 500A-500F on the pre-defined path 506 from the optimal data capture location(s), the AUV 502 may process the data using a second set of machine learning and/or artificial intelligence models to identify one or more issues (e.g., leak, abnormality) associated with the processing facility 10. For example, the second set of machine learning or artificial intelligence models may analyze the optimized data collected from each piece of equipment at a particular sub-system 500A-500F, and may raise an alarm if an anomaly is observed, as described in greater detail below. In some embodiments, the AUV 502 may host the second set of ML and/or AI models and may directly perform the analysis in real-time to identify potential issues. In other embodiments, the AUV 502 may communicate the data collected by the payload 504 over a network 514 to be processed by a server 516. The server 516 may include one or more processors 522, a memory 524 storing instructions 526 that, when executed by the one or more processors 522, cause the one or more processors 522 to analyze the recorded data in real-time and notify an end user if an anomaly (e.g., leak, abnormality) is observed or detected, as described in greater detail below. As illustrated, the server 516 may include communication circuitry 528 to enable the server 516 to receive data via the network 514.

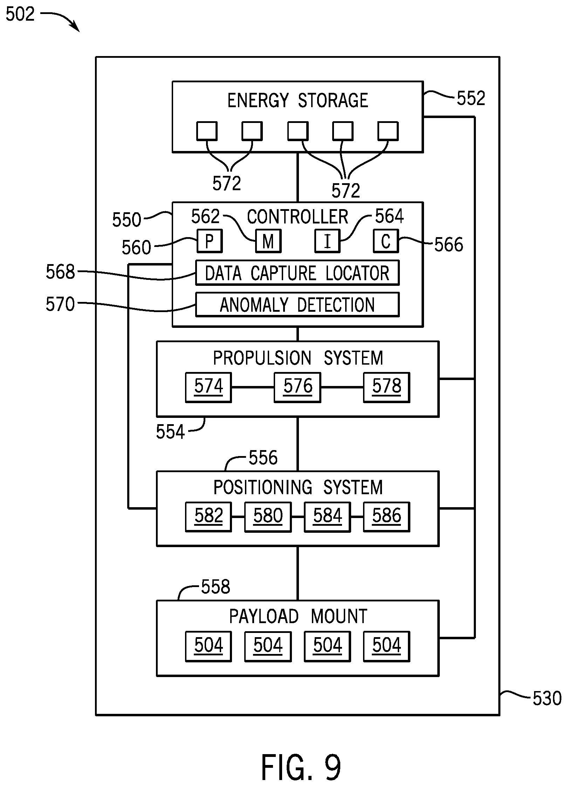

FIG. 9 illustrates a schematic of an embodiment of the AUV 502 of FIG. 7. As illustrated, the AUV 502 may include a frame 530 (e.g., structural framework, body, and/or housing), which may support and/or house a controller 550, an energy storage module 552, a propulsion system 554, a positioning system 556, and a payload mount 558. The controller 550 may include one or more processors 560, a memory 562, instructions 564 stored on the memory 562 and executable by the processor 560, and communication circuitry 566 configured to communicate with the sensors 512, the energy storage module 552, the propulsion system 554, the positioning system 556, the server 516, the one or more payloads 504 and/or other components associated with the AUV 502 and/or the processing facility 10. The controller 550 may communicate with the sensors 512 and/or components of the AUV 502 via the communication circuitry 566 over any suitable wired or wireless (e.g., radio or light based) network that may facilitate communication of data between systems, devices, and/or equipment. In some embodiments, the network may be a Wi-Fi network, a light detection and ranging (LIDAR) network, a 4G network, a 4G LTE network, a 5G network, a Bluetooth network, a Near Field Communication (NFC) network, or any suitable network for communicating information between devices. In some embodiments, the controller 550 may be configured to communicate with a portable computing device, which may be a portable handheld inspection device used by an operator to facilitate an inspection mission. In certain embodiments, the portable computing device includes a smart phone, a tablet computer, a laptop computer, or another portable computer having a user interface (e.g., an electronic display with a graphical user interface). For example, the controller 550 may receive instructions from the portable computing device to perform a particular inspection mission, and may load the suitable payload(s) 504 based on the inspection mission to be performed. As the AUV 502 performs the inspection mission, the controller 550 may be configured to receive sensor feedback from the sensors 512 and/or the payload 504 to identify changes in monitored parameters, identify when thresholds are crossed for the parameters, and determine optimal data capture locations based on the received data, as described in greater detail below.

As noted above, in some embodiments, the controller 550 may also include one or more machine learning or artificial intelligence models having software configured to process and analyze the data captured by the payload 504 and/or the data retrieved from the sensors 512. For example, in some embodiments, the controller 550 may include a data capture locator module 568 and an abnormality detection module 570. The data capture locator module 568 may be configured to receive environmental data from sensors 512, image and/or video data from the payload 504, and/or sensor data from the payload 504 in real-time to determine an optimal data capture location from which to capture data associated with a particular sub-system 500 of the processing facility 10 based on the inspection mission to be performed. Upon determining an optimal data capture location and retrieving data from the optimal data capture location, the anomaly detection module 570 may be configured to process the data to determine whether an anomaly (e.g., equipment failure, equipment malfunction, leak, hotspot) is present, as described in greater detail below. It should be noted that in some embodiments, each of the modules 568, 570 may be located on the server 516, and the AUV 502 may be configured to communicate data in real-time to the server 516 via the communication circuitry 566, thereby conserving power for the AUV 502 to perform the inspection mission.

The energy storage module 552 may include one or more energy storage units 572 (e.g., batteries) configured to provide power to the various components of the AUV 502. The energy storage module 552 also may include one or more solar panels configured to recharge the energy storage units 572. The energy storage module 552 may be coupled to the controller 550, the propulsion system 554, the positioning system 556, and/or the payload mount 558 to provide power to the various components of the aforementioned systems, thereby enabling the various systems (e.g., 550, 554, 556, 558) to perform their intended functions. In some embodiments, the energy storage module 552 and/or the energy storage units 572 may be recharged after an inspection mission by docking with the charging station 510 of FIG. 7. That is, the charging station 510 may be coupled to a power source that enables the charging station 510 to replenish the energy in the energy storage units 572, such that the AUV 502 may perform another inspection mission.

As noted above, the AUV 502 may be any vehicle (e.g., drone, robot) capable of traveling autonomously and collecting data associated with the processing facility 10. Accordingly, the propulsion system 554 may include a number of components configured to enable the AUV 502 to traverse a pre-defined path 506. For example, the AUV 502 may include a drive 574 (e.g., electric motor) configured to receive power from the energy storage module 552. The drive 574 may be coupled to a gear box 576, which may be coupled to a propulsor 578 configured to enable the AUV 502 to travel along the pre-defined path 506. For example, depending on the type of AUV 502 (e.g., aerial vehicle, ground vehicle, and/or water vehicle), the propulsor 578 may comprise wheels, legs, a rolling base, propellers, tracks, and/or any other component that may enable movement of the AUV 502 along the pre-defined path 506. The pre-defined path 506 may be a two-dimensional (2D) path (e.g., X, Y coordinates, wherein the X and Y coordinates may be latitude and longitude) or a three-dimensional (3D) path (e.g., X, Y, and Z coordinates, wherein the Z coordinate may be a height or elevation). In some embodiments, one or more of the components may be omitted based on the type of AUV 502 employed. For example, an aerial AUV 502 (e.g., a drone) may include one or more propellers, and may not include wheels or legs, while a ground AUV 502 may include wheels, legs, tracks, or a combination thereof, and may not include a propeller.

The positioning system 556 may be configured to couple to the payload mount 558 to position the payload mount 558 at a suitable location to collect data from the processing facility 10. To this end, the positioning system 556 may include a number of components that enable a position of the payload mount 558 (and the payload 504) to be adjusted based on conditions detected by the sensors 512 and/or based on data captured by the payload 504. For example, the positioning system 556 may include a drive 580 (e.g., electric motor) configured to receive power from the energy storage module 552 to operate the components of the positioning system 556. The drive 580 may be coupled to and configured to provide power to one or more arms 582, a sliding positioner 584, and/or a rotating positioner 586. Each of the components may be configured to facilitate manipulation or movement of the payload mount 558 (and the payload 504) with multiple degrees of freedom. For example, the one or more arms 582 may be coupled to one or more joints and may be extendable and/or retractable, thereby enabling the positioning system 556 to move the payload mount 558 along one or more axes (e.g., one, two, three, four, or more) to a desired location (e.g., optimal data capture location) based on the type of inspection mission, the environmental conditions present, and/or based on the data captured by the payload(s) 504. In some embodiments, the arms 582 may also be used to load one or more particular payloads 504 from the payload bank 508 to the payload mount 558. For example, upon receiving instructions to perform a particular inspection mission, the propulsion system 554 may move the AUV 502 to the payload bank 508, and the arms 582 may be configured to retrieve the one or more payloads 504 associated with the selected inspection mission from the payload bank 508. The arms 582 may retrieve the payload(s) 504 from the payload bank 508 and load the payload(s) 504 onto the payload mount 558. In some embodiments, an operator may be tasked with loading and unloading particular payloads 504 from the payload bank 508 onto the payload mount 558 based on the inspection mission to be performed.

The sliding positioner 584 may be configured to enable the positioning system 556 to translate the payload mount 558 along a linear axis (e.g., horizontal axis, vertical axis, or angled axis between horizontal and vertical axes) to a suitable location based on the detected conditions, the retrieved data, and/or the inspection mission to be performed. Similarly, the rotating positioner 586 may enable the positioning system 556 to rotate the payload mount 558 along one or more rotational axes. In this way, the data capture angle at which the payload 504 on the payload mount 558 captures data may be modified based on the various conditions, received data, and/or inspection mission to be performed. It should be noted that in some embodiments, the positioning system 556 may include fewer or more components than those illustrated. For example, if the AUV 502 is an aerial vehicle, the positioning system 556 may be omitted, as the propulsion system 554 (e.g., via the propellers 578) may be capable of controlling the position of the payload mount 558, the data capture angle, and/or the distance from a piece of equipment within the processing facility 10. However, regardless of the type of AUV 502 used, the propulsion system 554 and/or the positioning system 556 may enable the AUV 502 to move the payload mount 558 with one or multiple (e.g., two, three, four, five, six, or more) degrees of freedom such that relevant data may be captured from the processing facility 10, as described in greater detail below.

As noted above, the payload mount 558 may include one or more payloads 504 mounted thereon which may be configured to capture data based on a particular inspection mission the AUV 502 is programmed to perform. In some embodiments, the AUV 502 may carry multiple different payloads depending on the various tasks associated with an inspection mission. For example, for a liquid leak inspection mission, the payload 504 for the AUV 502 may include an acoustic device (e.g., microphone) configured to identify noises within certain pieces of equipment, which may be indicative of a liquid leak as well as one or more image capturing devices (e.g., thermal infrared camera). Further, the AUV 502 may include a vibration sensor that may be utilized to detect leaks within a component. For example, a vibration sensor may be placed on the surface of the equipment at a particular sub-system 500A-500F, and vibration data captured by the sensor may be indicative of a liquid leak present with the equipment. Meanwhile, for a gas leak inspection mission, the payload 504 on the payload mount 558 may include one or more image capturing devices as well as one or more point sensors configured to measure a concentration of gas in the air. Based on the data received by the controller 550 of the AUV 502 in real-time, the data capture locator module 568 may determine one or more optimal data capture locations for the AUV 502, and may direct the propulsion system 554 and/or the positioning system 556 to modify the position of the payload mount 558 (and the payload 504) such that data is captured from the one or more determined optimal data capture locations. For example, the data capture locator module 568 may estimate or identify the position of the payload mount 558 (and the payload 504) to reduce or eliminate interference caused by sun glare, wind, precipitation, people, animals, other machinery or equipment, or any combination thereof.

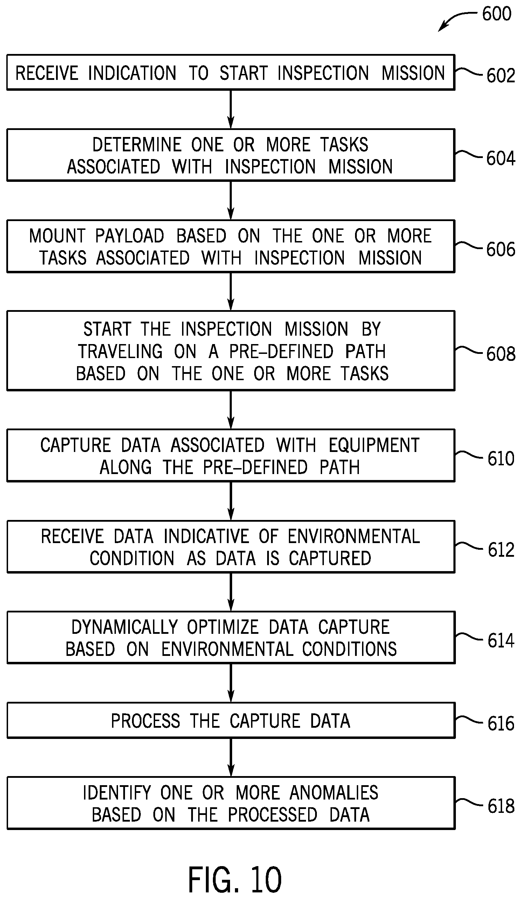

FIG. 10 illustrates a flow chart of a method 600 which may be employed by the controller 550 (or any other suitable computing device) to identify one or more anomalies associated with a processing facility based on data captured from an automated uncrewed vehicle. Although the following description of the method 600 is described in a particular order, it should be noted that the method 600 is not limited to the depicted order; and instead, the method 600 may be performed in any suitable order. In addition, although the controller 550 is described as performing the method 600, it should be understood that one or more steps of the method 600 may be performed by any suitable computing device (e.g., server 516) and the data may be communicated to the controller 550, thereby enabling the AUV 502 to perform the steps described herein.

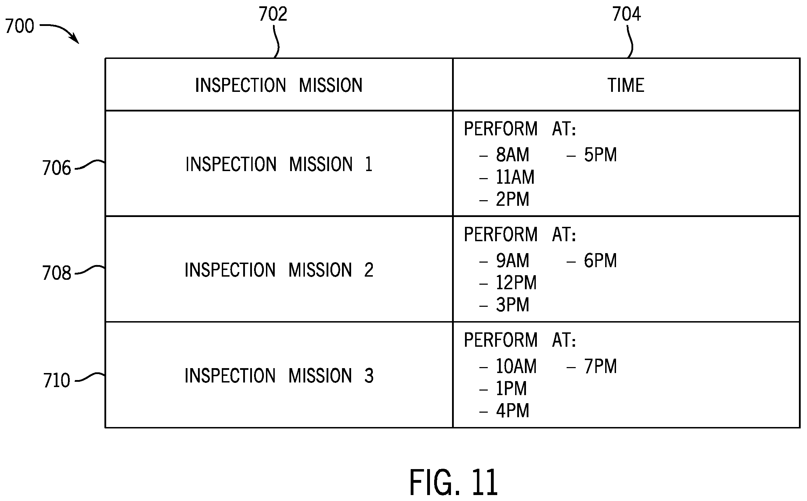

Referring now to FIG. 10, the controller 550 at block 602, may receive an indication to start a particular inspection mission. In certain embodiments, the controller 550 may be pre-programmed to perform certain inspection missions at periodic intervals (e.g., every hour, every 2 hours, at certain times each day, on certain days of the week, on certain weeks of the month, and so forth). For example, as shown in FIG. 11, the memory 562 may store a schedule 700 that has an inspection mission field 702 and a time field 704. As illustrated, the schedule 700 may dictate that the AUV 502 should perform a first type of inspection mission 706 (e.g., gas leak inspection mission) at 8:00 AM, 11:00 AM, 2:00 PM, and 5:00 PM each day, a second type of inspection mission 708 (e.g., liquid leak inspection mission) at 9:00 AM, 12:00 PM, 3:00 PM, and 6:00 PM each day, and/or a third type of inspection mission 710 (e.g., abnormality detection mission) at 10:00 AM, 1:00 PM, 4:00 PM, and 7:00 PM. While only three types of inspection missions are illustrated in the schedule 700, fewer or more inspection missions may be stored in the schedule 700 such that other issues and/or anomalies may be detected. Returning to FIG. 10, in other embodiments, an operator may be tasked selecting an inspection mission to be performed by the AUV 502, and may communicate the selected inspection mission to the controller 550.

As noted above, a particular inspection mission may be associated with a series of tasks that are to be performed at each of the sub-systems 500A-500F within the processing facility 10. Further, each of the sets of tasks may be associated with a particular payload 504 capable of performing the tasks. Accordingly, at block 604, the controller 550 may determine one or more tasks associated with the scheduled or selected inspection mission. For example, for a gas leak inspection mission, the AUV 502 may be tasked with capturing image data using a thermal infrared camera payload 504, as well as monitoring a concentration of gas in the air using a point sensor payload 504. For a confirmation inspection mission (e.g., confirming gauges are at a correct level), the AUV 502 may be tasked with capturing image data of various gauges disposed throughout the processing facility, and thus may carry a digital camera payload 504. As another example, for a liquid leak inspection mission, the AUV 502 may be tasked with capturing acoustic data associated with equipment (e.g., tank, valve, conduit) disposed throughout the processing facility 10 to identify whether a liquid leak is present.

Upon determining the one or more tasks associated with the selected or scheduled inspection mission, the controller 550 may, at block 606, operate the propulsion system 554 and/or the positioning system 556 to mount one or more payloads 504 onto the payload mount 558. As noted above, the one or more payloads 504 selected for the AUV 502 and mounted to the payload mount 558 may be based on the one or more tasks the AUV 502 is scheduled to perform for a respective inspection mission. In some embodiments, an operator may be tasked with loading the one or more payloads 504 onto the payload mount 558.

After mounting the requisite payloads 504 to the payload mount 558, the controller 550 may, at block 608, start the inspection mission by controlling the propulsion system 554 to direct the AUV 502 along the pre-defined path 506 associated with the selected inspection mission. As noted above, different pre-defined paths may be used based on the type of inspection mission to be performed. For example, for a gas leak inspection mission, the pre-defined path 506 may direct the AUV 502 to certain components (e.g., tanks, valves, conduits) of the processing facility that are susceptible to a gas leak, while for a confirmation inspection mission (e.g., confirming gauge pressure values), the pre-defined path 506 may direct the AUV 502 to different components (e.g., gauges) disposed throughout the processing facility 10. Similarly, for an abnormality detection inspection mission, the pre-defined path 506 may direct the AUV to still other components (e.g., compressor) of the processing facility 10.

As the AUV 502 traverses the pre-defined path 506 and carries the payload 504 associated with the selected or scheduled inspection mission, at block 610, the controller 550 may instruct the payload 504 to begin capturing data at pre-defined locations using the payload 504 based on the tasks to be performed. Indeed, the controller 550 may instruct the AUV 502 to travel along the pre-defined path 506 and perform the series of tasks (e.g., capture data via the payload 504) associated with the inspection mission at different locations along each of the sub-systems 500A-500F of the processing facility 10. The data initially captured by the payload 504 may be processed by the AUV 502 to determine whether one or more anomalies are present. Further, the data initially captured may include temperature data, background data, sound data, and the like, which may be used to determine an optimal data capture location, as described in greater detail below. However, because the controller 550 instructs the AUV 502 to capture data from specific locations before taking into account current environmental conditions, the initial data collection may yield uncertain or uninterpretable results.

Accordingly, at block 612, the controller 550 may receive data from the sensors 512 indicative of the current environmental conditions associated with the processing facility 10. The data indicative of the current environmental conditions may include information associated with wind conditions (e.g., direction, speed, and variations in wind), lighting conditions (e.g., intensity, direction, and/or type of lighting, such as natural sunlight or artificial light), cloud conditions (e.g., amount, location, movement direction, movement speed, and/or light reduction of clouds), precipitation conditions (e.g., type, amount, movement direction, and/or movement speed), smog conditions, fog conditions, storm conditions (e.g., thunder, lightning, hurricane, tornado, etc.), seismic activity (e.g., earthquakes), and the like. The type of precipitation may include rain, sleet, snow, dust/particulate, or any combination thereof.

Using the initial data captured in block 610 and the environmental data received from the sensors 512 at block 612, the data capture locator module 568 of the controller 550 may, at block 614, dynamically determine an optimal data capture location. That is, using the received data, the UAV 14 may adjust the position of the payload 504 relative to the target being inspected (e.g., adjust a relative distance, height, elevation), adjust the angle or orientation (e.g., relative to a surface in the background, relative to a gauge), adjust X, Y, Z coordinates of various shields (e.g., blocking sun, rain, wind, etc.), and the like. Further, in some embodiments, machine learning, artificial intelligence, historical data, user input, testing data (e.g., trial runs), fleet data (e.g., data from multiple AUVs at the same or different processing sites), weather forecast data, and/or other computer models may be used to enable the AUV 502 to adjust the position and/or orientation of the payload 504 to optimize data capture. Additionally, the data may be used to determine an optimal time to capture data. For example, the computer models may include models of daily weather patterns (e.g., sunlight, wind, clouds, etc.) or weather models, facility operational models (e.g., modeling various operational parameters of the equipment), human and animal interference models (e.g., model behavior of animals [e.g., birds, dogs] people, etc., over the course of a day), and the like. Such models may be used by the AUV 502 to identify patterns in weather, equipment behavior, interference behavior, and the like, such that optimal locations and/or times for inspection may be identified.

For example, the data capture locator module 568 may take into account the various models discussed above, and may determine that the effect of sunlight on an inspection process is greatest at a certain times during the day (e.g., 12:00 PM). Accordingly, the data capture locator module 568 may determine that an inspection mission associated with capturing image data of gauges should not be performed at 12:00 PM due to the increased amount of interference from the sunlight (e.g., shadows produced from operating equipment, glare produced on gauge), and instead may determine that an optimal time for a confirmation inspection mission (e.g., gauge detection) is at 8:00 AM, when an amount of sunlight interference is below a threshold value. As another example, the interference model may indicate that the processing facility 10 has a high concentration of birds at a particular location in the processing facility 10 during certain times throughout the day. The data capture locator module 568 may also determine that a high concentration of birds may interfere with a data capture process performed by the AUV 502. Accordingly, the data capture locator module 568 may determine to limit an amount of inspection in areas having greater than a threshold concentration of birds during certain times throughout the day, thereby limiting an amount of interference with the data capture process. As yet another example, the facility operational models may indicate that certain components in the processing facility 10 perform at higher capacities during the day. Such data may be useful in determining a time to perform abnormality inspection missions. For example, if a facility operational model indicates that a compressor operates at an increased capacity from 3:00 PM - 4:00 PM each day, the data capture locator module 568 may determine that an optimal time to perform an abnormality inspection mission is between 3:00 PM and 4:00 PM while the compressor is operating at an increased capacity, thereby enabling increased detection of abnormalities associated with the compressor. As noted above, in some embodiments, the processing performed at block 614 may be performed locally on the AUV 502, remotely on a remote computer (e.g., server 516), or a combination thereof.

Upon determining an optimal time to perform a particular inspection mission based on the various models employed by the AUV 502, the AUV 502 may begin recording data to detect one or more anomalies at the processing facility 10. For example, in a gas leak inspection mission, the AUV 502 may perform a first set of tasks associated with capturing image and/or video data at a particular location (e.g., distance, angle). As noted above, the collected image and/or video data may be associated with a gas plume temperature, direction, magnitude, and the like. Based on the data collected at block 610 and the environmental data received at block 612, the data capture locator module 568 may determine an optimal data capture location that corresponds to a location in which the distance between the gas plume and the payload 504 is less than a threshold distance, a location in which the temperature differential between the background and the gas plume is greater than a threshold value, a location in which the background has less than a threshold number of moving objects, a location in which the wind direction is perpendicular to the data capture angle, or any combination thereof. When performing a second set of tasks associated with capturing data indicative of a concentration of gas in the air, the data capture locator module 568 may determine an optimal data capture location that corresponds to a location in which the distance between the gas plume and the payload 504 is less than a threshold distance, a location in which the gas concentration is higher than a threshold concentration, a location in which the payload 504 is positioned downstream of the gas plume relative to the wind direction such that the gas plume is directed towards the point sensor, or any combination thereof.

As another example, when performing a liquid leak inspection mission, the AUV 502 may perform a set of tasks associated with capturing sound data at a particular location. Using the sound data from block 610 and the environmental data from block 612, the data capture locator module 568 may, at block 614, determine an optimal data capture location that corresponds to a location that is less than a threshold distance away from the liquid leak, a location in which an amount of noise interference is less than a threshold decibel, or a combination thereof. In some embodiments, the AUV 502 may determine that the optimal data capture location corresponds to a location on a surface of the target equipment. For example, when using a vibration sensor to detect liquid leaks, the AUV 502 may position the sensor on the target equipment that has a potential leak such that vibrational data may be recorded. Increased amount of vibrations within a conduit or valve may be indicative of a potential leak.

Similar to a liquid leak inspection mission, in an abnormality detection inspection mission, the AUV 502 may perform a set of tasks associated with capturing sound data at a particular location. Using the sound data captured at block 610 and the environmental data captured at block 612, the data capture locator module 568 may, at block 614, determine an optimal data capture location that corresponds to a location that is less than a threshold distance away from the leak and/or a location in which an amount of noise interference is less than a threshold value. For example, upon detecting that a piece of equipment along the pre-defined path is malfunctioning (e.g., via sound data indicative of one or more loose pieces within the equipment), the controller 550 may instruct the propulsion system to orient the payload 504 away from a particular piece of equipment so that noise interference may be reduced, thereby enabling increased detection of an abnormality.

As another example, for a confirmation inspection mission (e.g., confirming gauges are at acceptable levels), the AUV 502 may be tasked with capturing image and/or video data of one or more gauges disposed throughout the processing facility 10. Using the image and/or video data captured at block 610 and the environmental data received at block 612, the data capture locator module 568 may, at block 614, determine an optimal data capture location that corresponds to a location that is less than a threshold distance away from the gauge, a location in which the amount of sunlight does not interfere with captured images, a location in which the angle of sunlight does not cause reflections on the gauge, or any combination thereof.

Upon determining an optimal data capture location and time to capture data based on the set of tasks that the UAV 14 is scheduled to perform, the controller 550 may control the propulsion system 554 and/or the positioning system 556 to position the payload mount 558 (and the payload 504) at the optimal data capture location and orient the payload mount 558 at an appropriate angle based on the various conditions (e.g., environmental conditions, processing facility conditions, gas plume properties, liquid leak properties, etc.). In this way, the controller 550 may dynamically optimize data capture as conditions change in real time. As noted above, in some embodiments, the AUV 502 may also include one or more data capture enhancement devices that may facilitate data capture during the inspection mission. For example, in some embodiments, the AUV 502 may include one or more ultraviolet filters that filter out various wavelengths of sunlight. Further, the AUV 502 may include a sunlight blocker that provides cover for the payload 504 of the AUV 502, such that the AUV 502 may capture data with a limited amount of interference from the sunlight present at the processing facility. As another example, the AUV 502 may include a wind breaking device that may be positioned around a particular gas plume or piece of equipment, thereby minimizing the effects of the wind on the data capture process.

As the data is captured from the optimal data capture locations, at block 616, the controller 550 may utilize the anomaly detection module 570 to process the captured data. As noted above, the anomaly detection module 570 may include one or more machine learning or artificial intelligence models that receive the data from the optimal data capture location in real-time, and process the data to identify potential issues at the processing facility 10. Then, at block 618, based on the data processed by the anomaly detection module 570, the controller 550 may identify one or more anomalies (e.g., gas leak, liquid leak, equipment failure, equipment malfunction), and generate output to alert an operator of the one or more anomalies such that they may be addressed.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A method of operation of an unmanned autonomous vehicle (502), the method comprising:
generating a map (202) of a facility (10) at least partially based on data collected by the unmanned autonomous vehicle (502);
autonomously maneuvering the unmanned autonomous vehicle about the facility to perform inspections of assets (12) of the facility (10) based at least in part on the generated map; and
using the unmanned autonomous vehicle to survey (206) the facility (10) for one or more abnormalities while autonomously maneuvering the unmanned autonomous vehicle (502) about the facility (10); and
using the unmanned autonomous vehicle (502) to place a vibration sensor on the assets (12) to detect liquid leaks.

2. The method of claim 1, comprising:
detecting, via the unmanned autonomous vehicle (502), an anomaly within the facility (10);
autonomously maneuvering the unmanned autonomous vehicle (502) toward the detected anomaly; and
performing, via the unmanned autonomous vehicle (502), an intelligent inspection (208) to investigate the detected anomaly.

3. The method of claim 2, comprising generating and transmitting a report (210) about the surveyed facility and/or the detected anomaly.

4. The method of claim 2 or 3, wherein the detected anomaly comprises a gas leak, a liquid leak, an equipment malfunction, or some combination thereof.

5. The method of any preceding claim, wherein surveying (206) the facility for the one or more abnormalities comprises detecting one or more actual anomalies that have occurred within the facility.

6. The method of any preceding claim, wherein surveying (206) the facility for the one or more abnormalities comprises predicting one or more future anomalies.

7. The method of claim 6, comprising taking preventive action with respect to a predicted future anomaly of the one or more predicted future anomalies.

8. The method of any preceding claim, comprising:
receiving (252), via the unmanned autonomous vehicle (502), an initial map of the facility (10);
updating (254), via the unmanned autonomous vehicle (502), the initial map of the facility based on data collected by the unmanned autonomous vehicle (502); and
autonomously maneuvering the unmanned autonomous vehicle (502) about the facility to perform inspections of assets (12) of the facility (10) based at least in part on the updated map.

9. The method of any preceding claim, comprising sharing data with one or more other unmanned autonomous vehicles (502) to allow for collaborative learning among the unmanned autonomous vehicles (502).

10. The method of any preceding claim, wherein inspection of the assets (12) comprises inspecting gas sensors of the facility for potential gas leaks.

## Patentansprüche

1. Verfahren eines Betriebs eines unbemannten autonomen Fahrzeugs (502), das Verfahren umfassend:
Erzeugen einer Karte (202) einer Anlage (10) mindestens teilweise basierend auf Daten, die durch das unbemannte autonome Fahrzeug (502) gesammelt werden;
autonomes Manövrieren des unbemannten autonomen Fahrzeugs in der Anlage umher, um Prüfungen von Assets (12) der Anlage (10) mindestens teilweise basierend auf der erzeugten Karte durchzuführen; und
Verwenden des unbemannten autonomen Fahrzeugs, um die Anlage (10) auf eine oder mehrere Anomalien zu untersuchen (206), während das unbemannte autonome Fahrzeug (502) in der Anlage (10) autonom umher manövriert wird; und
Verwenden des unbemannten autonomen Fahrzeugs (502), um einen Vibrationssensor an den Assets (12) zu platzieren, um Flüssigkeitslecks zu detektieren.

2. Verfahren nach Anspruch 1, umfassend:
Detektieren, über das unbemannte autonome Fahrzeug (502), einer Anomalie innerhalb der Anlage (10);
autonomes Manövrieren des unbemannten autonomen Fahrzeugs (502) zu der detektierten Anomalie hin; und
Durchführen, über das unbemannte autonome Fahrzeug (502), einer intelligenten Prüfung (208), um die detektierte Anomalie zu investigieren.

3. Verfahren nach Anspruch 2, umfassend das Erzeugen und ein Übertragen eines Berichts (210) über die untersuchte Anlage und/oder die detektierte Anomalie.

4. Verfahren nach Anspruch 2 oder 3, wobei die detektierte Anomalie ein Gasleck, ein Flüssigkeitsleck, eine Ausrüstungsfehlfunktion oder eine Kombination davon umfasst.

5. Verfahren nach einem der vorstehenden Ansprüche, wobei das Untersuchen (206) der Anlage auf die eine oder die mehreren Anomalien das Detektieren einer oder mehrerer tatsächlicher Anomalien umfasst, die innerhalb der Anlage aufgetreten sind.

6. Verfahren nach einem der vorstehenden Ansprüche, wobei das Untersuchen (206) der Anlage auf die eine oder die mehreren Anomalien ein Vorhersagen einer oder mehrerer zukünftiger Anomalien umfasst.

7. Verfahren nach Anspruch 6, umfassend ein Ergreifen einer vorbeugenden Maßnahme in Bezug auf eine vorhergesagte zukünftige Anomalie der einen oder der mehreren vorhergesagten zukünftigen Anomalien.

8. Verfahren nach einem der vorstehenden Ansprüche, umfassend:
Empfangen (252), über das unbemannte autonome Fahrzeug (502), einer anfänglichen Karte der Anlage (10);
Aktualisieren (254), über das unbemannte autonome Fahrzeug (502), der anfänglichen Karte der Anlage basierend auf Daten, die durch das unbemannte autonome Fahrzeug (502) gesammelt werden; und
autonomes Manövrieren des unbemannten autonomen Fahrzeugs (502) in der Anlage umher, um Prüfungen von Assets (12) der Anlage (10) mindestens teilweise basierend auf der aktualisierten Karte durchzuführen.

9. Verfahren nach einem der vorstehenden Ansprüche, umfassend ein gemeinsames Nutzen von Daten mit einem oder mehreren anderen unbemannten autonomen Fahrzeugen (502), um ein kollaboratives Lernen unter den unbemannten autonomen Fahrzeugen (502) zu ermöglichen.

10. Verfahren nach einem der vorstehenden Ansprüche, wobei die Prüfung der Assets (12) ein Prüfen von Gassensoren der Anlage auf potenzielle Gaslecks umfasst.

## Revendications

1. Procédé de fonctionnement d'un véhicule autonome sans pilote (502), le procédé comprenant :
la génération d'une carte (202) d'une installation (10) au moins partiellement sur la base de données collectées par le véhicule autonome sans pilote (502) ;
le fait de manœuvrer de manière autonome le véhicule autonome sans pilote autour de l'installation pour effectuer des inspections d'actifs (12) de l'installation (10) sur la base, au moins en partie, de la carte générée ; et
l'utilisation du véhicule autonome sans pilote pour examiner (206) l'installation (10) à la recherche d'une ou de plusieurs anomalies tout en manœuvrant de manière autonome le véhicule autonome sans pilote (502) autour de l'installation (10) ; et
l'utilisation du véhicule autonome sans pilote (502) pour placer un capteur de vibrations sur les actifs (12) afin de détecter des fuites de liquide.

2. Procédé selon la revendication 1, comprenant :
la détection, par l'intermédiaire du véhicule autonome sans pilote (502), d'une anomalie au sein de l'installation (10) ;
le fait de manœuvrer de manière autonome le véhicule autonome sans pilote (502) vers l'anomalie détectée ; et
le fait d'effectuer, par l'intermédiaire du véhicule autonome sans pilote (502), d'une inspection intelligente (208) pour enquêter sur l'anomalie détectée.

3. Procédé selon la revendication 2, comprenant la génération et la transmission d'un rapport (210) sur l'installation examinée et/ou l'anomalie détectée.

4. Procédé selon la revendication 2 ou 3, dans lequel l'anomalie détectée comprend une fuite de gaz, une fuite de liquide, un dysfonctionnement d'équipement, ou une combinaison de ceux-ci.

5. Procédé selon l'une quelconque revendication précédente, dans lequel l'examen (206) de l'installation à la recherche de la ou des anomalies comprend la détection d'une ou plusieurs anomalies réelles qui se sont produites dans l'installation.

6. Procédé selon l'une quelconque revendication précédente, dans lequel l'examen (206) de l'installation à la recherche de la ou des anomalies comprend la prédiction d'une ou plusieurs anomalies futures.

7. Procédé selon la revendication 6, comprenant la prise de mesures préventives par rapport à une anomalie future prédite parmi la ou les anomalies futures prédites.

8. Procédé selon l'une quelconque revendication précédente, comprenant :
la réception (252), par l'intermédiaire du véhicule autonome sans pilote (502), d'une carte initiale de l'installation (10) ;
la mise à jour (254), par l'intermédiaire du véhicule autonome sans pilote (502), de la carte initiale de l'installation sur la base de données collectées par le véhicule autonome sans pilote (502) ; et
le fait de manœuvrer de manière autonome le véhicule autonome sans pilote (502) autour de l'installation pour effectuer des inspections d'actifs (12) de l'installation (10) sur la base, au moins en partie, de la carte mise à jour.

9. Procédé selon l'une quelconque revendication précédente, comprenant le partage de données avec un ou plusieurs autres véhicules autonomes sans pilote (502) pour permettre un apprentissage collaboratif entre les véhicules autonomes sans pilote (502).

10. Procédé selon l'une quelconque revendication précédente, dans lequel l'inspection des actifs (12) comprend l'inspection de capteurs de gaz de l'installation pour détecter des fuites de gaz potentielles.
